(19) Europäisches Patentamt
European Patent Office
Office européen des brevets

(11) **EP 4 373 187 A1**

(12) **EUROPEAN PATENT APPLICATION**
published in accordance with Art. 153(4) EPC

(43) Date of publication:
**22.05.2024 Bulletin 2024/21**

(21) Application number: **22842455.2**

(22) Date of filing: **13.07.2022**

(51) International Patent Classification (IPC):
**H04W 72/04** (2023.01)     **H04W 72/54** (2023.01)
**H04L 5/00** (2006.01)      **H04L 5/14** (2006.01)
**H04L 5/16** (2006.01)      **H04J 11/00** (2006.01)

(52) Cooperative Patent Classification (CPC):
**H04J 11/00; H04L 5/00; H04L 5/14; H04L 5/16;
H04W 72/04**

(86) International application number:
**PCT/KR2022/010200**

(87) International publication number:
**WO 2023/287193 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.07.2021 KR 20210091295**

(71) Applicant: **LG Electronics Inc.**
**Yeongdeungpo-gu**
**Seoul 07336 (KR)**

(72) Inventors:
• **YOU, Hyangsun**
**Seoul 06772 (KR)**
• **KO, Hyunsoo**
**Seoul 06772 (KR)**
• **KIM, Kijun**
**Seoul 06772 (KR)**
• **KIM, Seonwook**
**Seoul 06772 (KR)**
• **SHIM, Jaenam**
**Seoul 06772 (KR)**

(74) Representative: **Plasseraud IP**
**66, rue de la Chaussée d'Antin**
**75440 Paris Cedex 09 (FR)**

(54) **OPERATION METHOD OF TERMINAL IN WIRELESS COMMUNICATION SYSTEM AND DEVICE USING SAME METHOD**

(57)     An operation method of a device in a wireless communication system and a device are provided. The device may be a terminal, a chipset, or a base station. A base station may provide, to a terminal, information related to a time resource for full duplex operation, a time resource for half duplex operation, each frequency resource for downlink or uplink operation, and a guard frequency resource. A terminal may determine, on the basis of this information, whether a guard frequency resource is available according to a time resource.

Processed by Luminess, 75001 PARIS (FR)

**(Cont. next page)**

EP 4 373 187 A1

# FIG. 23

Performing cell search based on primary synchronization signal, secondary synchronization signal, and physical broadcast channel (PBCH) demodulation reference signal (DMRS) — S231

Obtaining system information of the cell from the base station — S232

Performing a random access procedure with the base station — S233

Obtaining at least one of first time resource information indicating a first time resource in which the base station operates in half duplex (HD) and second time resource information indicating a second time resource in which the base station operates in full duplex (FD) — S234

Obtaining at least one of the first frequency resource information indicating a first frequency resource and the second frequency resource information indicating a second frequency resource from the base station — S235

Obtaining guard frequency configuration information for the guard frequency resource from the base station — S236

Based on the first frequency resource information, the second frequency resource information, and the guard frequency configuration information, determining i) a downlink reception resource that can perform downlink reception among the resources set as the downlink bandwidth part (DL BWP), and ii) an uplink transmission resource that can perform uplink transmission among the resources set as the uplink bandwidth part (uplink BWP) — S237

Based on a specific time resource corresponding to the first time resource, performing downlink reception in the downlink bandwidth part or uplink transmission in the uplink bandwidth part — S238

Based on the specific time resource corresponding to the second time resource, performing downlink reception on the downlink reception resource or uplink transmission on the uplink transmission resource — S239

**Description**

TECHNICAL FIELD

This disclosure relates to a method of operating a user equipment (UE) in a wireless communication system and an apparatus using the method.

BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing an FD operation, some frequency resources may be downlink subbands and other frequency resources may be uplink subbands for the same time resource.

When performing an FD operation, various interferences may occur, such as interference between subbands of a base station and a base station, interference between subbands of a UE and a UE, and interference between subbands of the UE itself. This interference causes performance degradation of FD operation.

To reduce the impact of such interference during FD operation, a guard band can be introduced. In NR where FD operation is introduced, it is necessary to clearly specify how to inform the UE of the guard band, UE operation in the guard band, etc.

**DISCLOSURE**

**TECHNICAL PROBLEM**

The technical problem that the present disclosure aims to solve is to provide a method of operating a UE in a wireless communication system and an apparatus that uses the method.

**TECHNICAL SOLUTION**

In one aspect, provided is a method of operating a user equipment (UE) in a wireless communication system. The method includes performing a cell search, the cell search being a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell, obtaining system information of the cell from a base station, performing a random access procedure with the base station, the random access procedure including i) transmitting a random access preamble to the base station, ii) receiving a random access response from the base station, iii) performing scheduled transmission using a scheduled uplink grant in the random access response, and iv) receiving a contention resolution message. The UE obtains at least one of first time resource information indicating a first time resource on which the base station operates in half duplex (HD) and second time resource information indicating a second time resource on which the base station operates in full duplex (FD) from the base station, obtains at least one of first frequency resource information indicating a first frequency resource and second frequency resource information indicating a second frequency resource from the base station, obtains guard frequency configuration information for a guard frequency resource from the base station. Based on some or all of the obtained information, the UE determines a downlink reception resource capable of performing downlink reception among the resources configured as the downlink BWP and an uplink transmission resource capable of performing uplink transmission among the resources configured as the uplink BWP.

In another aspect, provided is a user equipment (UE). The UE includes a transceiver, at least one memory and at least one processor operably coupled to the at least one memory and the transceiver. The processor performs the above-described UE operation method.

In still another aspect, provided is an apparatus of a UE. The apparatus includes at least one memory and at least one processor operably coupled to the at least one memory. The processor performs the above-described UE operation method based at least in part on instructions stored in the memory.

In still another aspect, provided is at least one computer readable medium (CRM) having instructions to be executed by at least one processor. The CRM performs each step of the above-described UE operation method.

In still another aspect, provided is a method of operating a base station in a wireless communication system. The method includes performing a random access procedure with a user equipment (UE), transmitting at least one of first time resource information indicating a first time resource on which the base station operates in half duplex (HD) and second time resource information indicating a second time resource on which the base station operates in full duplex (FD) to the UE, transmitting at least one of first frequency resource information indicating a first frequency resource and second frequency resource information indicating a second frequency resource to the UE, transmitting guard frequency configuration information for a guard frequency resource to the UE. The base station determines a downlink reception resource capable of performing downlink reception by the UE among the resources configured as a downlink bandwidth part (BWP) and an uplink transmission resource capable of performing uplink transmission by the UE among the resources configured as an uplink BWP, based on the first frequency resource information, the second frequency resource information and the guard frequency configuration information, performs downlink transmission to the UE in the downlink BWP or uplink reception form the UE in the uplink BWP based on a specific time resource corresponding to the first time resource, and performs i) downlink transmission to the UE in the downlink reception resource and uplink reception from another UE in the uplink transmission resource or ii) uplink reception from the UE in the uplink transmission resource and downlink transmission to the another UE in the downlink reception resource, based on the specific time resource corresponding to the second time resource.

In still another aspect, provided is a base station (BS). The BS includes a transceiver, at least one memory and at least one processor operably coupled to the at least one memory and the transceiver. The processor performs the above-described base station operating method.

## ADVANTAGEOUS EFFECTS

In NR supporting full duplex operation, the impact of interference between subbands can be reduced, and as a result, transmission and reception performance can be improved.

## BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SB-FD or SS-FD exist together.
FIG. 14 shows examples of first time resource, second time resource, first frequency resource and second frequency resource.
FIG. 15 shows another example of a first time resource, a second time resource, a first frequency resource and a second frequency resource.
FIG. 16 is an example of guard subband configuration.
FIG. 17 is another example of guard subband configuration.
FIG. 18 illustrates interference between base stations or interference between UEs.
FIG. 19 illustrates the operation process of the UE.
FIG. 20 shows an example of guard frequency resource configurations.
FIG. 21 is another example of guard frequency resources.
FIG. 22 is an example of configuring guard frequency resources.
FIG. 23 illustrates a method of operating a UE in a wireless communication system.
FIG. 24 illustrates the signaling process between the base station and the UE when implementing the method of FIG. 23.

FIG. 25 illustrates a wireless device that can be applied the present specification.

FIG. 26 shows an example of a signal processing module structure.

FIG. 27 shows another example of the structure of a signal processing module in a transmission device.

FIG. 28 shows an example of a wireless communication device according to an implementation example of the present disclosure.

FIG. 29 shows an example of the processor 2000.

FIG. 30 shows an example of the processor 3000.

FIG. 31 shows another example of a wireless device.

FIG. 32 shows another example of a wireless device applied to the present specification.

FIG. 33 illustrates a hand-held device applied to the present specification.

FIG. 34 illustrates the communication system 1 applied to this specification.

**MODE FOR INVENTION**

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

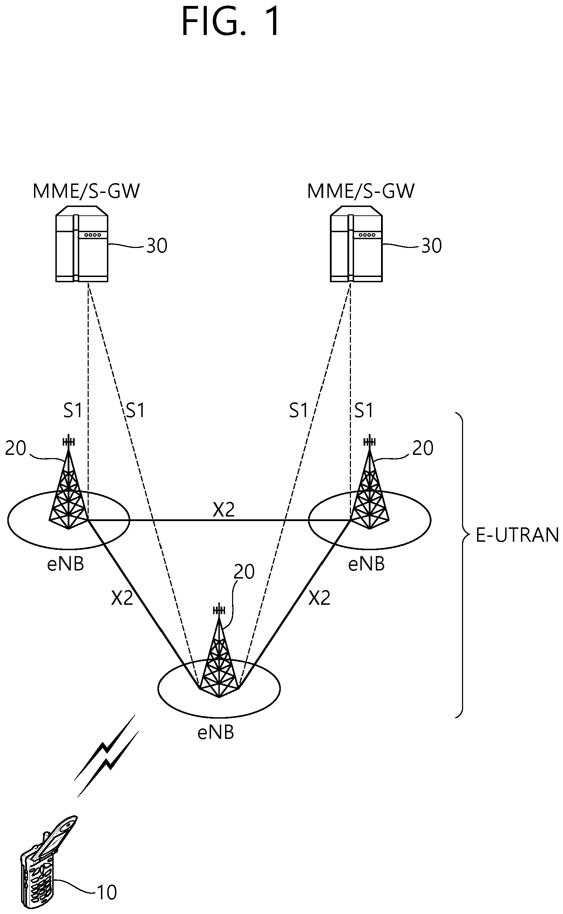

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

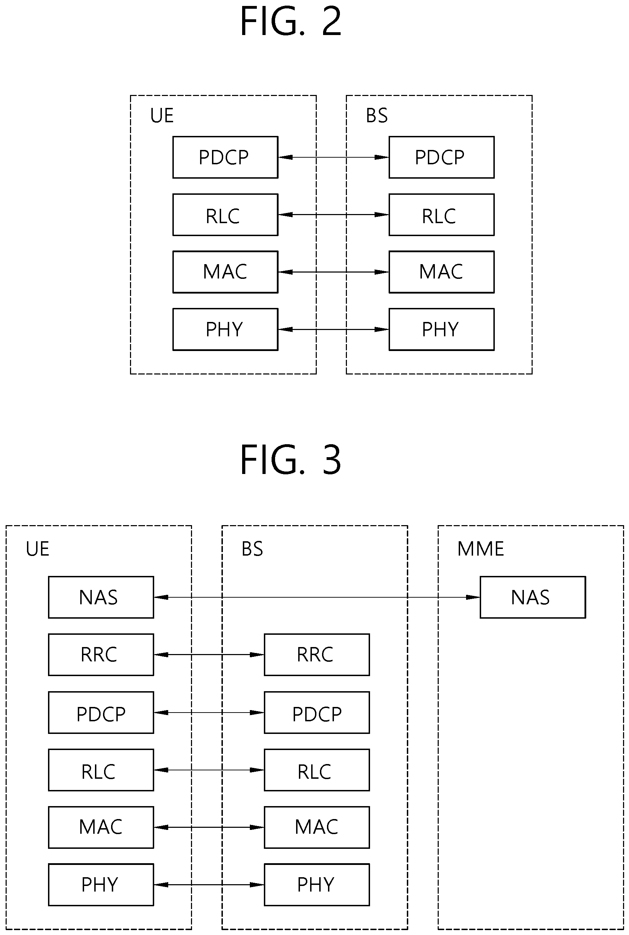

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

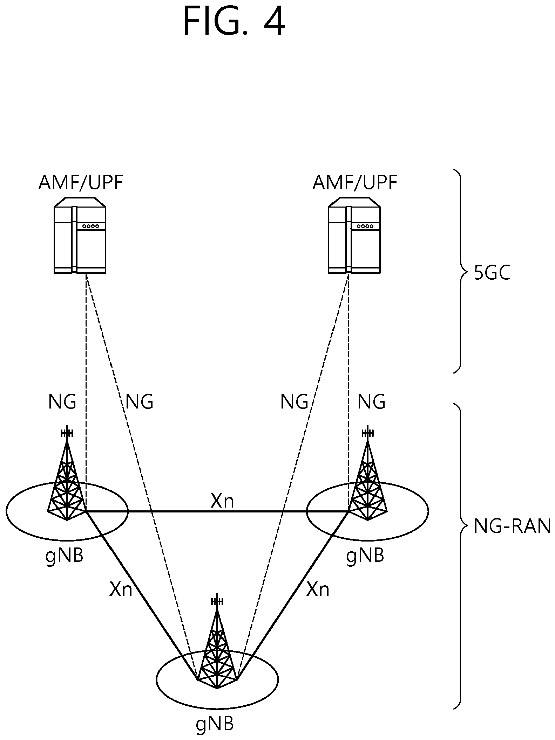

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

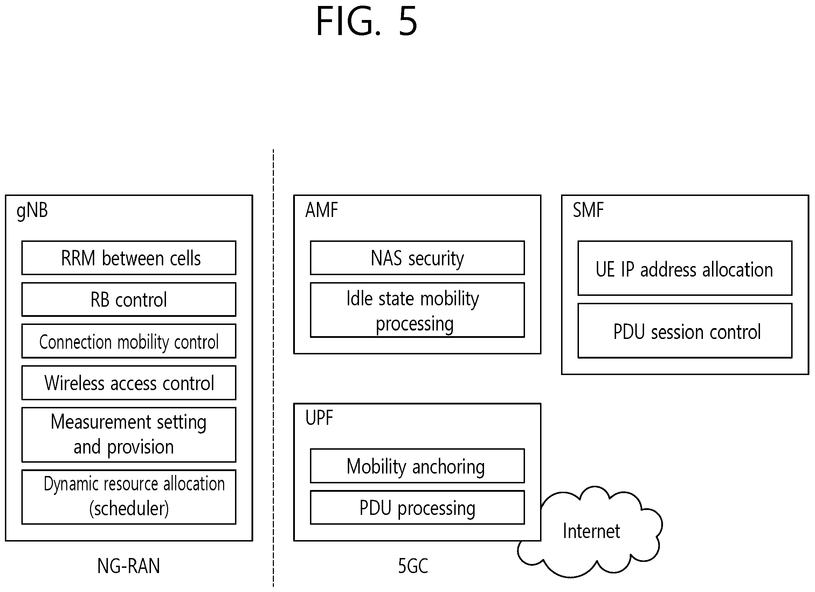

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

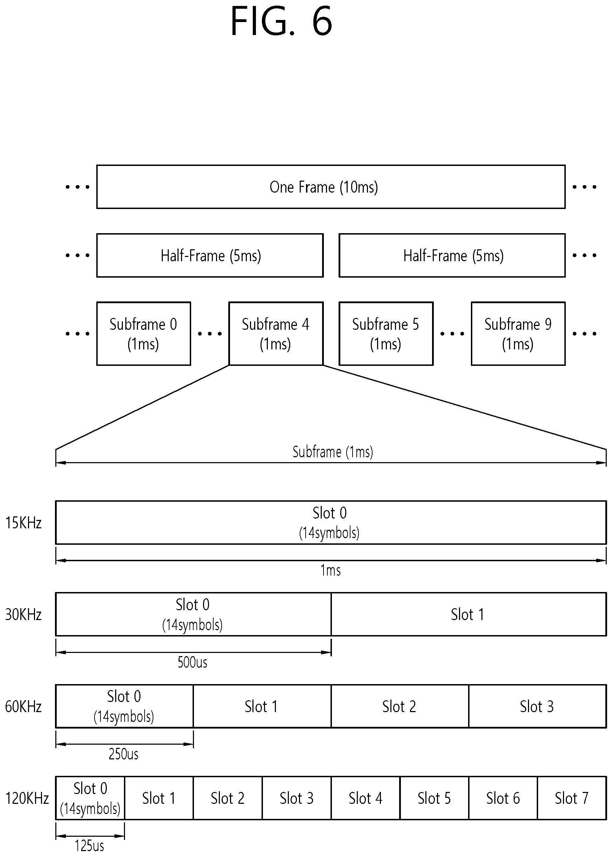

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame\mu}_{slot}$ | $N^{subframe\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of $\mu$=0, 1, 2, 3.

Table 2-1 below illustrates that the number of symbols per slot, the number of slots per frame, and the number of slots per subframe vary depending on the SCS, in case of using an extended CP.

[Table 2-1]

| $\mu$ | $N^{slot}_{symb}$ | $N^{frame,u}_{slot}$ | $N^{subframe,u}_{slot}$ |
|---|---|---|---|
| 2 | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

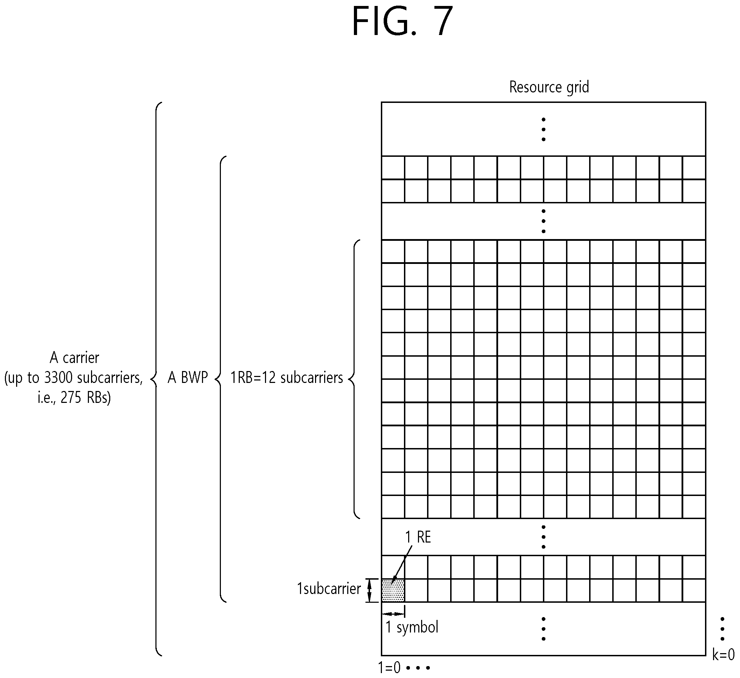

FIG. 7 illustrates a slot structure of an NR frame.

A slot may include a plurality of symbols in a time domain. For example, in case of a normal CP, one slot may include 7 symbols. However, in case of an extended CP, one slot may include 6 symbols. A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

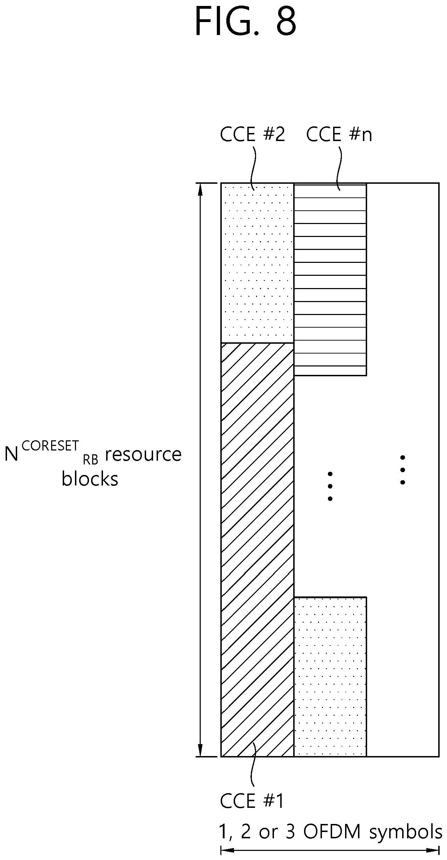

FIG. 8 illustrates CORESET.

Referring to FIG. 8, the CORESET includes $N^{CORESET}_{RB}$ number of resource blocks in the frequency domain, and $N^{CORESET}_{symb} \in \{ 1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

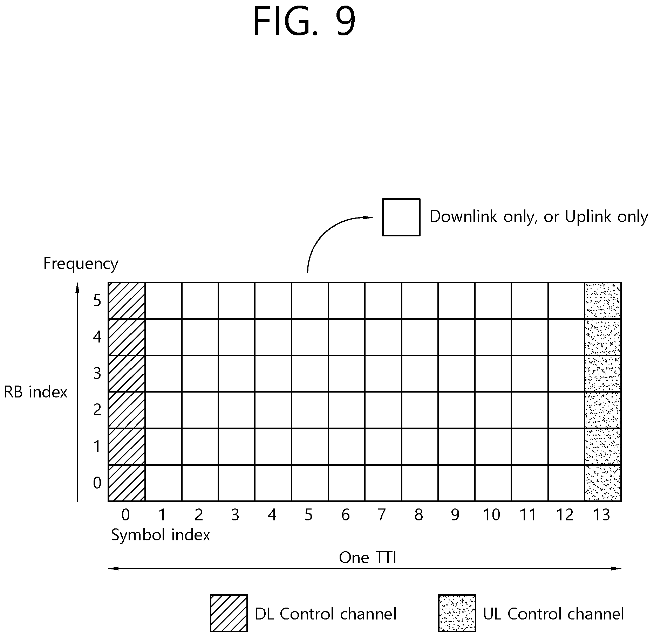

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be sent within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

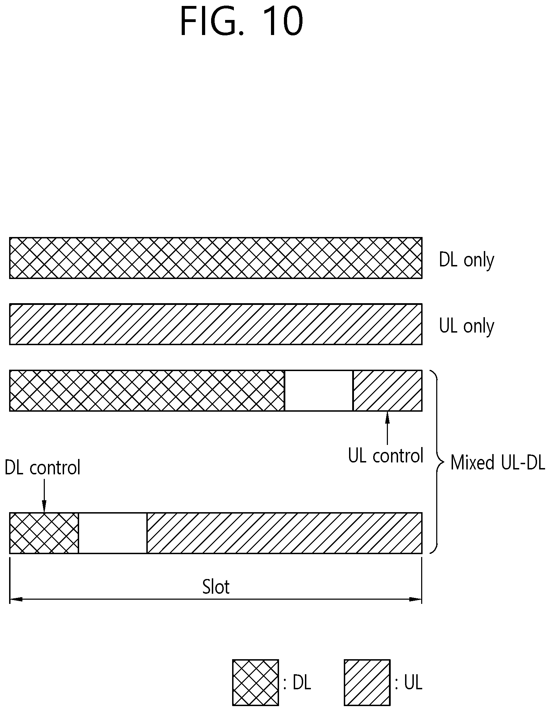

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

1. DL only configuration,
2. UL only configuration,
3. Mixed UL-DL configuration:

DL region + Guard period (GP) + UL control region,

DL control region + GP + UL region.

DL region: (i) DL data region, (ii) DL control region + DL data region.

UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of $5 \times 5$ cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

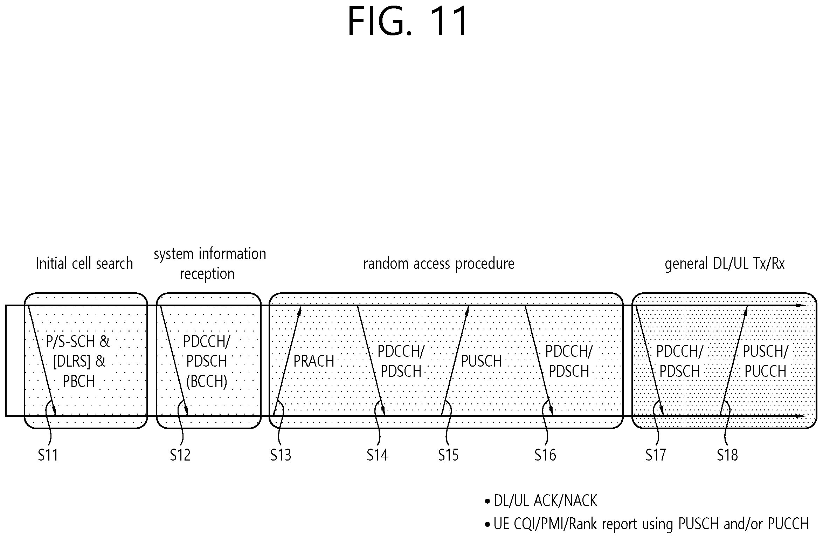

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation for NR will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

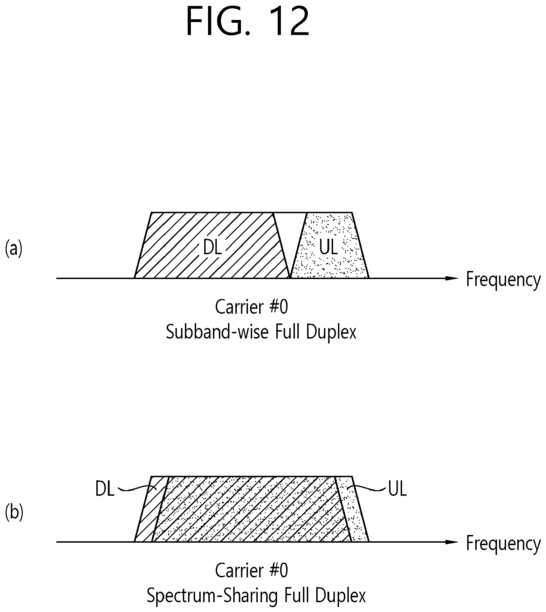

FIG. 12 shows examples of how to apply full duplex within an intra-carrier.

Referring to FIG. 12, the full duplex method includes subband-wise full duplex (hereinafter referred to as SB-FD) as shown in (a) of FIG. 12 and spectrum sharing full duplex (hereinafter referred to as SS-FD as shown in (b) of FIG. 12 may be considered.

In the case of SB-FD, DL and UL are transmitted and received through different frequency resources within the same carrier (e.g., carrier #0). That is, different frequency resources are used in DL and UL for the same time resource.

In the case of SS-FD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SB-FD or SS-FD operations can be performed on time resources that perform full duplex operations.

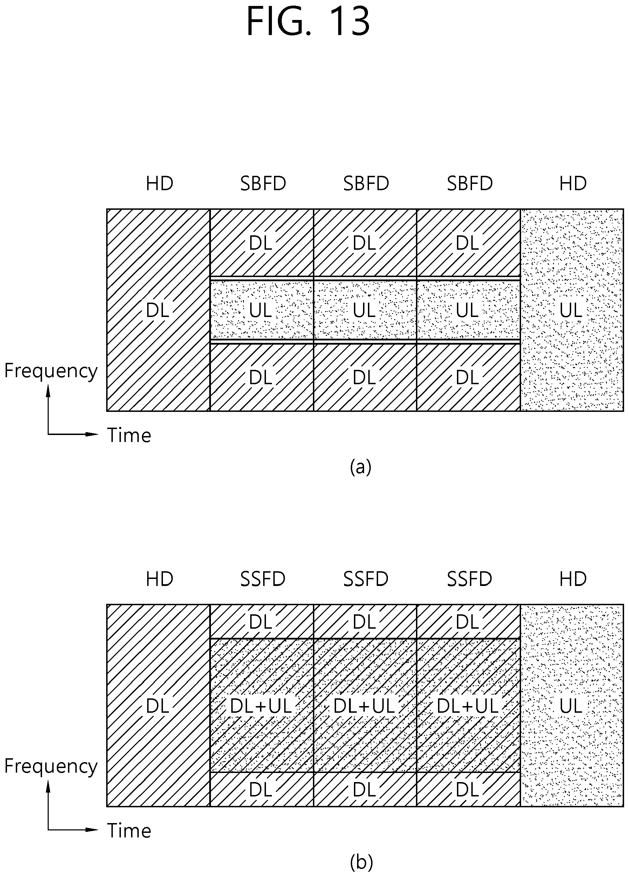

FIG. 13 shows an example in which a time resource operating in half duplex (HD) and a time resource operating in full duplex (FD) such as SB-FD or SS-FD exist together.

In (a) of FIG. 13, some time resources operating as SB-FD (=SBFD) are indicated as SBFD, and time resources operating as HD are indicated as HD. In (b) of FIG. 13, some time resources operating as SS-FD (=SSFD) are indicated as SSFD, and time resources operating as HD are indicated as HD. The unit of time resource may be, for example, a slot or symbol.

In time resources operating as SB-FD, some frequency resources are used as DL resources, and other frequency resources are used as UL resources. Between the DL frequency resource and the UL frequency resource, there may be a guard sub-band that is unused and empty for both DL and UL. Guard subbands may also be referred to by other terms, such as guard frequency resources or guard subcarrier(s).

In time resources operating with SS-FD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs a full duplex operation, but the UE performs a half duplex operation. However, the content of the present disclosure can be applied even when both the base station and the UE perform full duplex operation.

Based on this discussion, this disclosure proposes a guard sub-band resource configuration method for intra-carrier full duplex operation.

When using SB-FD to perform simultaneous downlink (DL) and uplink (UL) operations on the same time resource, a guard subband can be placed between the DL and UL subbands to reduce self-interference (SI) and cross-link interference (CLI) from the DL subband to the UL subband (or from the UL subband to the DL subband) on the same carrier.

When using SS-FD to perform DL and UL operations simultaneously on the same time resource, a guard subband can be placed at the edge of the carrier to reduce adjacent carrier interference (ACI) from neighboring carriers.

This disclosure assumes that a cell (base station) can perform both DL transmission and UL reception in the same time resource in an FD scheme such as SB-FD or SS-FD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

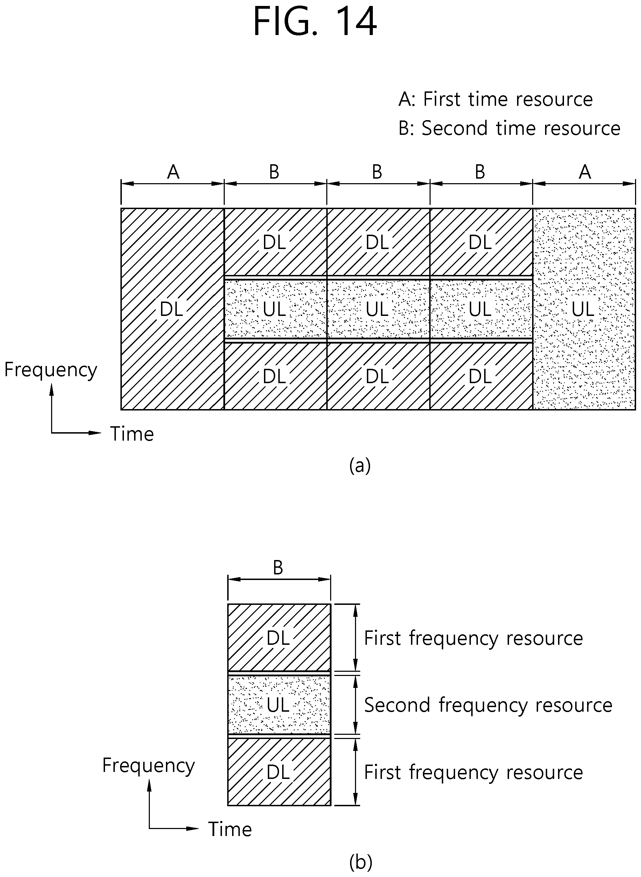

FIG. 14 shows examples of a first time resource, a second time resource, a first frequency resource, and a second frequency resource.

Referring to (a) of FIG. 14, the first time resource (represented by A) operates in HD. In the second time resource (represented by B), for example, it can operate as SB-FD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

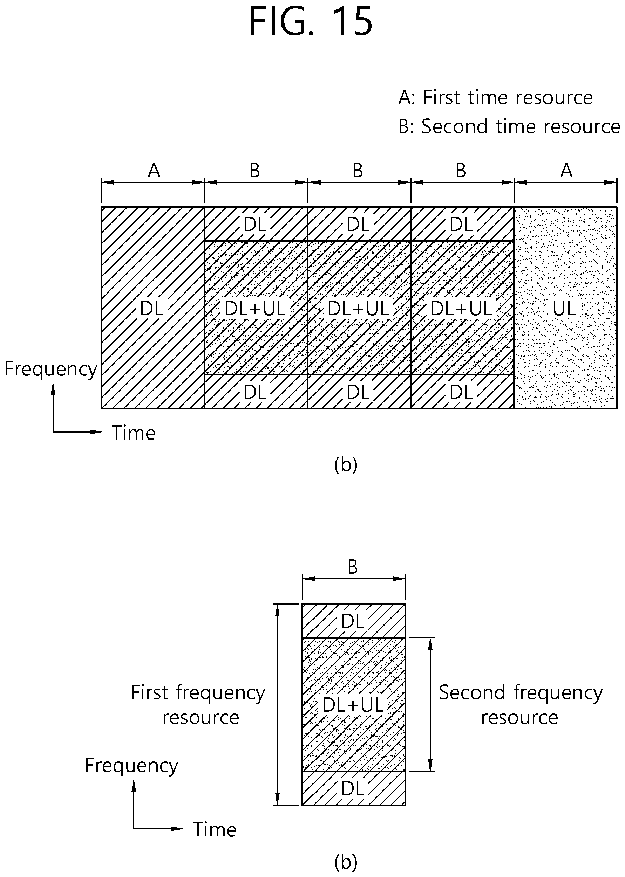

FIG. 15 shows another example of a first time resource, a second time resource, a first frequency resource, and a second frequency resource.

Referring to (a) of FIG. 15, the first time resource (represented by A) may operate as HD, and the second time resource (represented by B) may operate as SS-FD, for example. In the first time resource, the resource indicated by DL corresponds to the above-described 1-1 time resource, and the resource indicated by UL corresponds to the 1-2 time resource.

Referring to (b) of FIG. 15, the frequency resource operating as DL in the second time resource corresponds to the above-described first frequency resource, and the frequency resource operating as UL corresponds to the above-described second frequency resource. The frequency resource indicated as DL+UL is a frequency resource capable of both DL operation and UL operation and corresponds to both the first frequency resource and the second frequency resource.

The first frequency resource and/or the second frequency resource may have all or some of the following characteristics.

1) When performing SB-FD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SS-FD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SB-FD operation, the second frequency resource may be composed of continuous frequency resources, and the first frequency resource may be composed of discontinuous frequency resources. At this time, the first frequency resource may be composed of a plurality (e.g.,two) set of continuous frequency resources. This is to reduce interference from DL transmission on adjacent carriers to UL resources by placing the second frequency resource used for UL at the center of the frequency resources constituting the cell. Conversely, the first frequency resource may be composed of continuous frequency resources, and the second frequency resource may be composed of discontinuous frequency resources. At this time, the second frequency resource may be composed of a plurality (e.g.,two) set of continuous frequency resources. This is to reduce interference from DL transmission on UL resources in adjacent carriers by placing the second frequency resource used for DL at the center of the frequency resources constituting the cell.

4) When performing SS-FD operation, the second frequency resource may be composed of some frequency resources of the first frequency resource. At this time, the second frequency resource may be configured to have fewer X physical resource blocks (PRBs) on one or both edges than the first frequency resource. This is to reduce interference from DL transmission on adjacent carriers to UL reception. This may be interpreted as the guard frequency resource being applied only to the second frequency resource and not to the first frequency resource.

The network determines the 'first time resource' and 'second time resource', and the 'first frequency resource' and 'second frequency resource' as described above, and provides all or part of the corresponding information to the UE. The network performs DL transmission to the UE on '1-1 time resource within the first time' and 'first frequency resource within the second time resource', and performs UL reception from the UE on '1-2 time resource within the first time resource' and the 'second frequency resource within the second time resource'.

The UE receives all or part of the information about the 'first time resource' and 'second time resource', and the 'first frequency resource' and 'second frequency resource' as described above from the network, and determines the location of the resource. The UE performs DL reception from the network on all or part of the "1-1 time resource within the first time resource" and the "first frequency resource within the second time resource", and UL transmission to the network on the "1-2 time resource within the first time resource" and the "second frequency resource within the second time resource".

In the following, it is proposed how to set the resources of the guard subband in SB-FD and/or SS-FD environments. In the following, the term network can be interpreted as being replaced with a base station (gNB, eNB, BS) or CU (Centralized Unit)/DU (Distributed Unit). Additionally, the UE can be interpreted as being replaced by the MT (Mobile terminal) of the IAB-node.

When operating in SB-FD and SS-FD, depending on the characteristics of the various interferences, a guard subband may be required: i) within the frequency resource comprising the cell, ii) within the frequency resource comprising the component carrier (CC), or iii) within the frequency resource in which the UE is set to operate.

<Adjacent carrier interference (ACI)>

A guard subband may be required to attenuate interference (ACI) from adjacent carriers.

When considering performing SS-FD operation, when receiving UL on carrier 1 and performing DL transmission on an adjacent carrier (carrier 2), a guard subband may be positioned at the edge of the frequency resource comprising carrier 1 to reduce the interference of DL transmission on carrier 2 to UL reception on carrier 1.

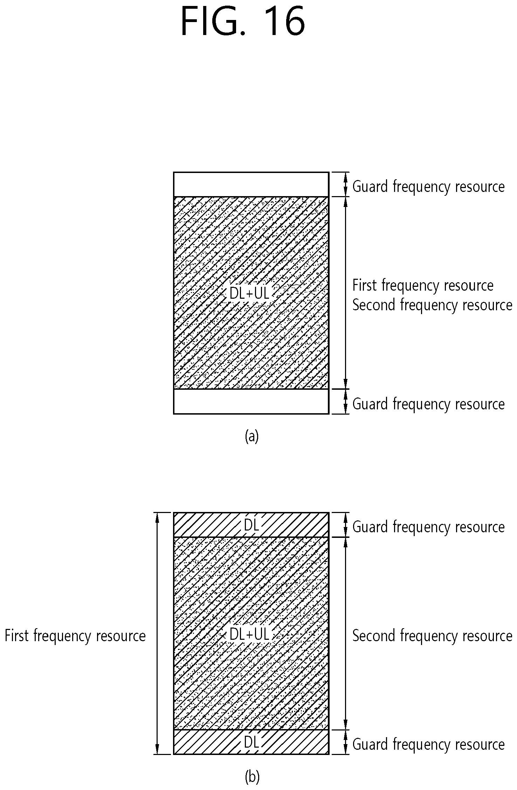

FIG. 16 is an example of a guard subband (guard frequency resource) setup.

Referring to (a) of FIG. 16, when performing the SS-FD operation at a certain time resource, some frequency resources at one or both edges of the frequency resources comprising the cell may be used as guard subbands (which may be referred to as guard frequency resources), and the remaining frequency resources may be used as DL frequency resources (first frequency resources) and UL frequency resources (second frequency resources).

Because interference from neighboring carriers affects UL reception, the guard subband applies only to the UL frequency resource (second frequency resource) and may not apply to the DL frequency resource (first frequency resource).

Referring to (b) of FIG. 16, when performing the SS-FD operation at a certain time resource, for the UL frequency resource (second frequency resource), some frequency resources at one or both edges of the frequency resources comprising the cell may be used as guard subbands (guard frequency resources), and the remaining frequency resources may be used as the UL frequency resource (second frequency resource). On the other hand, the guard subband (guard frequency resource) is not applied to the DL frequency resource (first frequency resource), and the entire frequency band can be used as the DL frequency resource (first frequency resource).

<Self-interference (SI)>

A guard subband may be required to attenuate self-interference (SI) from neighboring subbands.

Considering performing SB-FD operation, when performing DL transmission in the DL subband (first frequency resource) and UL reception in the UL subband (second frequency resource) of the same cell, a guard subband may be placed between (at the boundary of) the DL subband and the UL subband to reduce the interference of DL transmission in the DL subband to UL reception in the UL subband.

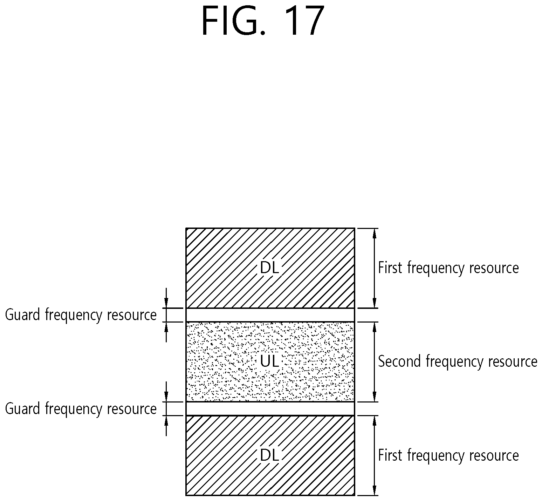

FIG. 17 is another example of a guard subband setup.

Referring to FIG. 17, when performing the SS-FD operation in a specific time resource, the DL subband (first frequency resource) and the UL subband (second frequency resource) may be located non-overlappingly in the frequency resources comprising the cell. In this case, some frequency resources between the DL and UL subbands can be used as a guard subband.

As shown in FIG. 17, when the center frequency resource of a cell is used as a second frequency resource and a first frequency resource exists at the top and bottom, respectively, a guard subband is located in each of the two portions corresponding to the boundaries of the first and second frequency resources.

<Cross-link interference (CLI)>

A guard subband may be required to attenuate cross-link interference (CLI) caused by transmissions in adjacent subbands. When there are two cells operating in an intra-carrier environment, both cells can perform SB-FD operation.

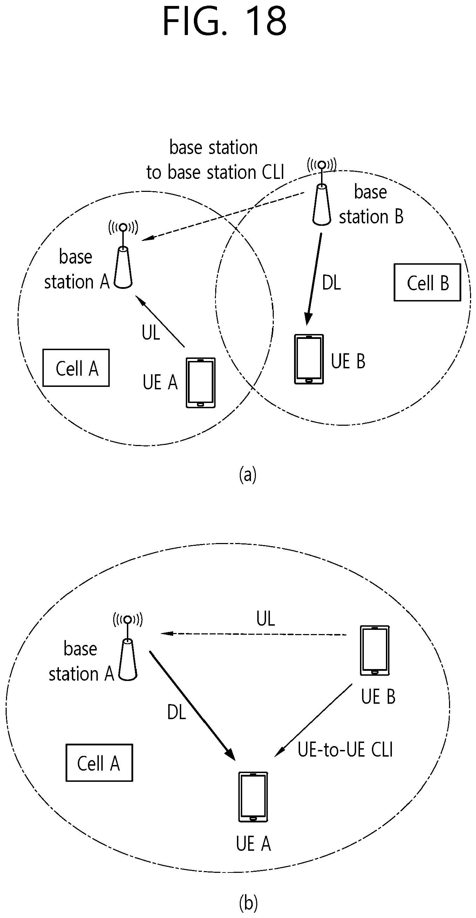

FIG. 18 illustrates interference between base stations or interference between UEs.

Referring to (a) of FIG. 18, when the two cells located within the carrier are referred to as cell A and cell B, respectively, the DL subband (first frequency resource) and UL subband (second frequency resource) of cell A may be set to be the same as the DL subband (first frequency resource) and UL subband (second frequency resource) of cell B, respectively. Alternatively, frequency resources with different DL/UL orientations between Cell A and Cell B may be set to not overlap (e.g., the DL subband of Cell A and the UL subband of Cell B are set to use non-overlapping frequency resources, and the UL subband of Cell A and the UL subband of Cell B are set to use non-overlapping frequency resources). In this case, the DL signal transmitted by base station B (gNB B) to UE B in the DL subband of cell B may interfere with the UL signal received by base station A from UE A in the UL subband of cell A. This interference can be referred to as "base station to base station CLI" between neighboring subbands. To reduce this CLI, a guard subband may be required between the frequency resources comprising Cell B's DL subband and the frequency resources comprising Cell A's UL subband.

Referring to (b) of FIG. 18, when Cell A is operating as SB-FD, the UL signal transmitted from UE C to base station A in the UL subband may interfere with UE A's reception of the DL signal transmitted from base station A to UE A in the DL subband. This interference can be referred to as 'UE-to-UE CLI' between adjacent subbands. To reduce this CLI, a guard subband may be required between the frequency resources constituting the DL subband and the frequency resources constituting the UL subband of Cell A. Such UE-to-UE CLI between neighboring subbands can also occur when UE A and UE C are served by different cells (i.e., when UE C performs UL transmissions to Base Station B and UE A performs DL reception from Base Station A). In such cases, a guard subband may be required between the frequency resources comprising the DL subband in Cell A and the frequency resources comprising the UL subband in Cell B to reduce CLI.

To reduce the various interferences described above, the present disclosure proposes a method for establishing a guard subband i) within a frequency resource comprising a cell, ii) within a frequency resource comprising a component carrier, or iii) within a frequency resource in which a UE is set to operate.

In the time resource when the base station is performing HD operation, the UE can perform DL reception or UL transmission using the entire frequency resource that makes up the DL bandwidth part (BWP) or UL BWP. On the other hand, in time resources that behave in an FD fashion, such as SF-FD or SS-FD, the UE can only perform DL reception or UL transmission with limited frequency resources out of the total frequency resources constituting the DL BWP or UL BWP. More specifically, the UE may only perform DL reception with the first frequency resource among the frequency resources constituting the DL BWP in time resources that operate in the FD mode. At this time, DL reception is not performed on the frequency resources included in the guard frequency resources. And/or the UE may perform UL transmission only on the second frequency resource among the frequency resources constituting the UL BWP in time resources operating in the FD scheme. At this time, UL transmission is not performed on the frequency resources included in the guard frequency resources.

For this purpose, in the first time resource, the UE performs DL reception over the entire frequency resource for which the UE is set to perform DL reception operations, but in the second time resource, the UE performs DL reception over a first frequency resource that is more limited than the frequency resource for which the UE performs DL reception in the first time resource.

In the first time resource, the UE performs UL transmissions over the entire frequency resource over which the UE is set to perform UL transmission operation, but in the second time resource, the UE performs UL transmissions over a second frequency resource that is more limited than the frequency resource over which the UE performs UL transmissions in the first time resource.

Even if the UE is set to receive DL on a frequency resource that does not correspond to the first frequency resource in the second time resource, it will not perform DL reception on the frequency resource that does not correspond to the first frequency resource. At this time, the UE determines that the resources used as guard frequency resources are not included in the first frequency resource. Alternatively, even if DL reception is configured on a resource used as a guard frequency resource, the UE does not perform DL reception on that resource.

Even if UL transmission is set to a frequency resource that does not correspond to the second frequency resource in the second time resource, the UE does not perform UL transmission in the frequency resource that does not correspond to the second frequency resource. At this time, the UE determines that resources used as guard frequency resources are not included in the second frequency resource. Alternatively, even if UL transmission is configured on a resource used as a guard frequency resource, the UE does not perform UL transmission on that resource.

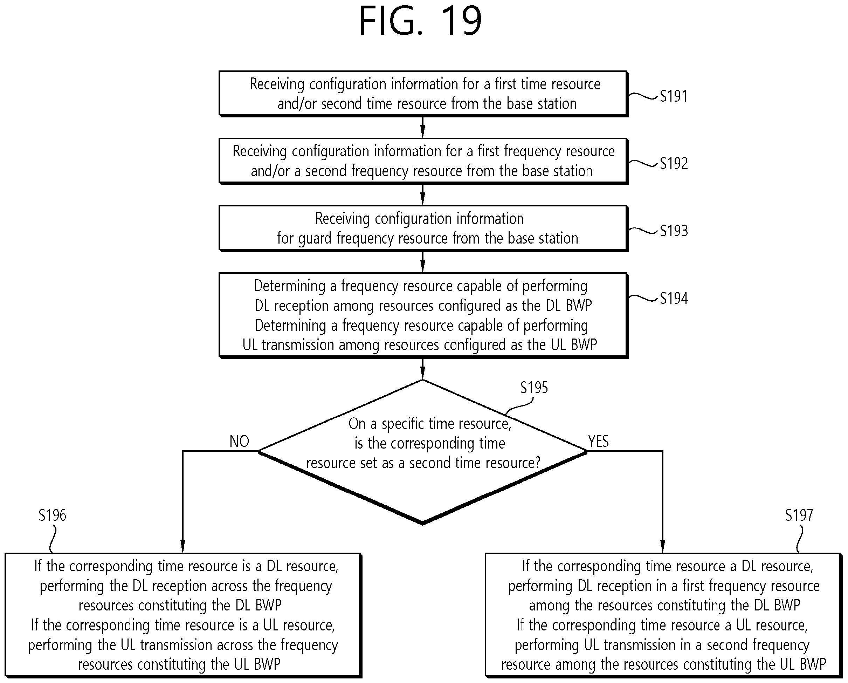

FIG. 19 illustrates the operation process of the UE.

Referring to FIG. 19, the UE receives time configuration information from the base station regarding whether a specific time resource is included in the first time resource and/or the second time resource (S191). For example, the UE may receive first time configuration information indicating a first time resource and second time configuration information indicating a second time resource. Alternatively, information indicating whether a specific resource is a first time resource or a second time resource may be received.

The UE receives first frequency information indicating (setting) the first frequency resource and/or second frequency information indicating (setting) the second frequency resource from the base station (S192). Additionally, the UE receives guard frequency information indicating (setting) guard frequency resources from the base station (S193).

The UE determines a frequency resource capable of performing DL reception or UL transmission based on at least one of the information received in steps S191-S193 (S194). For example, based on the first frequency information, the second frequency information, and the guard frequency information, the UE may determine which of the resources constituting the DL BWP can perform actual DL reception and/or which of the resources constituting the UL BWP can perform actual UL transmission.

For example, resources through which the UE can actually perform DL reception may be resources excluding the guard frequency resource from the resources included in the first frequency resource among the resources constituting the DL BWP. Resources through which the UE can actually perform UL transmission may be resources excluding the guard frequency resource from the resources included in the second frequency resource among the resources constituting the UL BWP.

The UE determines whether a specific time resource corresponds to the first time resource or the second time resource from the time configuration information (S195).

When a specific time resource is determined to be a first time resource (i.e., determined not set as a second time resource), the UE may perform the set/scheduled DL reception across the resources constituting the DL BWP, provided that the specific time resource is a resource that is set to perform DL reception. If the above specific time resource is a resource that is set to perform UL transmissions, the set/scheduled UL transmissions can be performed across the resources constituting the UL BWP (S196).

If the specific time resource is determined to be a second time resource, the UE may perform DL reception within a frequency resource that is capable of performing actual DL reception determined through step S194 among the resources set as DL BWP, if the specific time resource is a resource set to perform DL reception. If the above specific time resource is a resource set to perform UL transmission, UL transmission can be performed within the frequency resources that can perform actual UL transmission as determined through step S194 among the resources set as UL BWP (S197).

This operation allows the base station to perform half-duplex operation in which it performs only one of DL transmission or UL reception across the frequency resources comprising the cell in the first time resource, and full-duplex operation in which it performs DL transmission over the first frequency resource within the frequency resources constituting the cell and simultaneously performs UL reception over the second frequency resource within the frequency resources constituting the cell in the second time resource.

Section A. A method for the UE to determine guard frequency resources

Below, we propose a method in which the network sets guard frequency resourcerelated information to the UE and the UE determines the guard frequency resource.

For the guard frequency resource for SB-FD operation, it is necessary to be located between the frequency resource performing UL transmission and the frequency resource performing DL reception to reduce the impact of CLI and SI in the intra-carrier. In this case, the guard frequency resource may be located within a frequency resource where the UE is set to receive DL signals/channels or within a frequency resource where the UE is set to transmit UL signals/channels. Then, the UE shall not perform DL reception/UL transmission on the guard frequency resource, and for such operations, the UE needs to know the location of the guard frequency resource.

For this purpose, the network may determine the resources of the guard subband and provide the UE with all or part of the information corresponding to the configuration of such guard subband. The network will not perform any transmissions or receptions on these guard subband resources and will leave them empty.

The UE may receive all or part of the information corresponding to the configuration of the guard subband from the network. This frequency information can be set on a per PRB or per RB group (RBG) basis. This may be accompanied by reference subcarrier spacing information, which is assumed for setting the guard frequency resource. These guard frequency resources may include information about one or multiple guard subbands. The UE may use this information to determine the location and amount of guard sub-band resources for the corresponding cell, and if the set guard frequency resource overlaps with the first frequency resource and/or the second frequency resource, the UE may determine that the resource set as the guard frequency resource is excluded from the first frequency resource and/or the second frequency resource. Alternatively, it may be determined that transmission and reception are not performed on the corresponding guard subband resource.

The UE may determine that the configuration for the guard frequency resource applies only to the second time resource and does not apply to the first time resource. That is, the guard frequency resource is not applied to the first time resource, and it is determined that the frequency resource set as the guard frequency resource is used for DL or UL. On the other hand, the configured guard frequency resource is applied to the second time resource, and it is determined that DL reception and/or UL transmission is not performed on the guard frequency resource.

In [Method 1] through [Method 3] below, we propose a method in which the network provides information about the guard frequency resource to the UE for the above operation, and the UE determines the guard frequency resource from the information.

[Method 1] Information about the location and size (width/size) of the guard frequency resource can be set. For example, the frequency location where the guard frequency resource starts and the size of the guard frequency resource can be set.

Method 1-1. Guard frequency resources can be applied regardless of the BWP applied by the UE. That is, from the UE's perspective, guard frequency resources can be applied to a common location regardless of the applied BWP.

More specifically, the following method can be applied.

1) One or multiple sets of 'frequency resource size' and 'frequency resource location' information can be set. In this case, the UE determines that a guard frequency resource equal to the corresponding continuous 'frequency resource size' is located from each 'frequency resource location'.

Alternatively, only a plurality of pieces of information about the 'frequency resource location' may be set, and only one piece of information about the 'frequency resource size' may be set. In this case, the same 'frequency resource size' may be applied to all 'frequency resource locations'. The UE determines that a guard frequency resource equal to the continuous 'frequency resource size' is located from each 'frequency resource location'.

The 'frequency resource location' may be specifically set as follows.

i) 'frequency resource location' may be, cell-specifically, the relative frequency location from the starting RB of the cell.

The 'frequency resource location' may be the relative frequency position from the frequency position corresponding to point A, which is a common reference point for the resource block grids of the cell. The point A may be a value set by the network to the UE, and may mean the 'absoluteFrequencyPointA' value included in the configuration message.

Alternatively, the 'frequency resource location' may be set in the form of a common resource block (CRB) index. Expressed differently, it may mean the number of CRBs corresponding to the gap between CRB #0 and the corresponding frequency position.

ii) 'frequency resource size' can be specifically set as follows.

'frequency resource size' can be set in the form of the number of CRBs. Additionally, information on reference subcarrier spacing may be set together.

Information on the 'frequency resource location' and 'frequency resource size' may be set in the form of a resource indication value (RIV).

RIV is a number that specifies frequency domain resource allocation. In general, two values (i.e., the number of RBs and the starting RB) can be used for resource allocation. However, using RIV, the number of RBs and the starting RB can be expressed as one value. Therefore, there is a benefit in terms of the number of bits carrying information. This RIV can be structured as follows.

RIV for setting guard frequency resources can be configured to have a limited starting RB (position of frequency resource) value.

RIV for setting guard frequency resources may be configured to have a value of a limited number of RBs (size of frequency resource). For example, the RIV value may be configured to express values within 0 to 10 RBs as the number of RBs.

2) A total of two sets of 'frequency resource size' and 'frequency resource location' information can be set. In this case, the UE determines that a guard frequency resource equal to the corresponding continuous 'frequency resource size' is located from each 'frequency resource location'. Let's call the 'frequency resource size' and 'frequency resource location' corresponding to the first set 'frequency resource location 1' and "frequency resource size 1" respectively, and the 'frequency resource size' and 'frequency resource location' corresponding to the second set 'frequency resource location 2' and 'frequency resource size 2' respectively. At this time, the UE determines that the first frequency resource consists of frequency resources equal to 'frequency resource size 1' that are continuous in the direction in which the frequency axis index increases from 'frequency resource location 1'. Additionally, the UE determines that the second frequency resource consists of frequency resources equal to 'frequency resource size 2', which are continuous in the direction in which the frequency axis index decreases from 'frequency resource location 2'.

'frequency resource location 1' can be set as follows

i) 'frequency resource location 1' may be a relative frequency position from the start RB of the cell. For example, it may be the relative frequency position from the frequency position corresponding to point A, which is a common reference point for the cell's resource block grids. At this time, point A is a value set by the network to the UE and may mean the 'absoluteFrequencyPointA' value included in the configuration message.

Alternatively, 'frequency resource location 1' may be set in the form of a CRB (common resource block) index.

The second 'frequency resource location 2' may be a relative frequency position from the CRB Z in the direction in which the frequency index decreases. In other words, 'frequency resource location 2' can mean the number of CRBs corresponding to the gap between CRB Z and the corresponding frequency resource location. In other words, if the value of the number of RBs corresponding to 'frequency resource location 2' is A, it may mean the position of CRB #Z-A.

At this time, the value of Z may additionally be equal to 274. Alternatively, the value of Z may be a value set from the network.

'frequency resource size' can be specifically set as follows.

'frequency resource size' can be set in the form of the number of CRBs. At this time, 'frequency resource size 1' and 'frequency resource size 2' can be set as follows. 'frequency resource size 1' and 'frequency resource size 2' can always have the same value. In other words, one 'frequency resource size' value is set and can be applied equally to both frequency resources.

Of the two sets of 'frequency resource size' and 'frequency resource location' information, only one set can be set. In this case, information on whether the set 'frequency resource location' corresponds to 'frequency resource location 1' or 'frequency resource location 2' may be set together.

Information on the 'frequency resource location' and 'frequency resource size' may be set in the form of a resource indication value (RIV). As described above, RIV is a number that specifies frequency domain resource allocation. In general, two values (i.e., the number of RBs and the starting RB) can be used for resource allocation. However, using RIV, the number of RBs and the starting RB can be expressed as one value. Therefore, there is a benefit in terms of the number of bits carrying information. This RIV can be structured as follows.

RIV for setting guard frequency resources can be configured to have a limited starting RB (position of frequency resource) value. Considering that two guard frequency resources are set, the value of the start RB may be equal to or smaller than $Z/2$ or $Z/2-1$. Alternatively, if the size of the maximum frequency resource that can be set is M, the RIV for setting the guard frequency resource may be equal to or smaller than $Z/2-M$ or $Z/2-M-1$.

RIV for setting guard frequency resources may be configured to have a value of a limited number of RBs (size of frequency resource). For example, if the size of the maximum frequency resource that can be set is M, the RIV value can be configured to express the value within 0 to M RBs as the number of RBs. Alternatively, the RIV value can be configured to express the values within 1 to M RBs as the number of RBs.

Method 1-2. Guard frequency resources can be defined within the BWP of the UE. That is, the location of the guard frequency resource may vary depending on the BWP applied by the UE. That is, some of the resources that make up the BWP of the UE can be applied as guard frequency resources. In this case, guard frequency resources can be set and applied independently for each BWP.

1) One or multiple sets of 'frequency resource size' and 'frequency resource location' information can be set. In this case, the UE determines that a guard frequency resource equal to the corresponding continuous 'frequency resource size' is located from each ''frequency resource location'.

Alternatively, only a plurality of pieces of information about the 'frequency resource location' may be set, and only one piece of information about the 'frequency resource size' may be set. In this case, the same 'frequency resource size' may be applied to all 'frequency resource location's. Then, the UE determines that a guard frequency resource equal to the continuous 'frequency resource size' is located from each ' frequency resource location'.

At this time, the 'frequency resource location' may be the relative frequency location from the start RB of the BWP. Expressed differently, 'frequency resource location' may mean the number of PRBs corresponding to the gap between PRB #0 and the corresponding frequency location. In other words, it may mean a PRB index.

'frequency resource size' can be set in the form of the number of PRBs.

2) A total of two sets of 'frequency resource size' and 'frequency resource location' information can be set. In this case, the UE determines that a guard frequency resource equal to the corresponding continuous 'frequency resource size' is located from each 'frequency resource location'. Let's call the 'frequency resource size' and 'frequency resource location' corresponding to the first set 'frequency resource location 1' and "frequency resource size 1" respectively, and the 'frequency resource size' and 'frequency resource location' corresponding to the second set 'frequency resource location 2' and 'frequency resource size 2' respectively. At this time, the UE determines that the first frequency resource consists of frequency resources equal to 'frequency resource size 1' that are continuous in the direction in which the frequency axis index increases from 'frequency resource location 1'. Additionally, the UE determines that the second frequency resource consists of frequency resources equal to 'frequency resource size 2' that are continuous in the direction in which the frequency axis index decreases from 'frequency resource location 2'.

'frequency resource location 1' may be a relative frequency position from the start PRB of the BWP. Expressed differently, 'frequency resource location 1' may mean the number of PRBs corresponding to the gap between PRB #0 and the corresponding frequency position. In other words, it may mean a PRB index.

'frequency resource location 2' may be the relative frequency position from the last PRB of the BWP. In other words, 'frequency resource location 2' may mean the number of PRBs corresponding to the gap between the PRB Z and the corresponding frequency resource location, assuming that the last PRB of the BWP is PRB #Z. That is, when the value of the number of PRBs corresponding to 'frequency resource location 2' is A, it may mean the position of PRB #Z-A.

'frequency resource size' can be set in the form of the number of PRBs. At this time, 'frequency resource size 1' and 'frequency resource size 2' can be set as follows. 'frequency resource size 1' and 'frequency resource size 2' can always have the same value. In other words, one 'frequency resource size' value is set and can be applied equally to both frequency resources.

Of the two sets of 'frequency resource size' and 'frequency resource location' information, only one set can be set. In this case, information on whether the set 'frequency resource location' corresponds to 'frequency resource location 1' or 'frequency resource location 2' may be set together.

The guard frequency resource may be set not to overlap with the first frequency resource and the second frequency resource.

Alternatively, the guard frequency resource may overlap with the first frequency resource and/or the second frequency resource. In this case, the UE may determine that the frequency resource overlapping with the guard frequency resource is not included in the first frequency resource and/or the second frequency resource.

[Method 2] The UE determines a part of the first frequency resource and/or the second frequency resource as a guard frequency resource.

For this purpose, the network can set information about the size of the guard frequency resource to the UE.

Guard frequency resources can be applied regardless of the BWP applied by the UE. That is, guard frequency resources can be applied to a common location regardless of the BWP applied from the UE's perspective. In this case, the UE may receive information about a frequency resource (e.g., a CRB resource) used as a first frequency resource and/or a frequency resource (e.g., a CRB resource) used as a second frequency resource for the frequency axis resources comprising the cell. From this, the UE can determine the frequency resource (e.g.,CRB resource) used as the second frequency resource. Additionally, information on the reference subcarrier spacing applied when setting the size of the guard frequency resource can be set together.

Alternatively, guard frequency resources may be defined within the BWP of the UE. That is, the location of the guard frequency resource may vary depending on the BWP applied by the UE. Some of the resources that make up the UE's BWP may be applied as guard frequency resources. In this case, the configuration and size of guard frequency resources may be set differently for each BWP.

If the guard frequency resource is defined within the BWP of the UE, the second frequency resource may mean a frequency resource constituting the UL BWP. Alternatively, when only some of the frequency resources constituting the UL BWP are actually usable, the second frequency resource may mean a frequency resource determined to be actually usable.

The first frequency resource may mean a frequency resource constituting the DL BWP. Alternatively, the first frequency resource may refer to a frequency resource excluding the frequency resource constituting the UL BWP from the resources constituting the DL BWP. Alternatively, the first frequency resource may mean a frequency resource determined to be actually usable when only some of the frequency resources constituting the DL BWP are actually usable.

The UE can determine the guard frequency resource as follows.

Method 2-1. When the size of the guard frequency resource received by the UE from the network is $W_G$, the UE may determine that the guard frequency resource is located within the second frequency resource used as UL as follows.

1) The UE determines that the guard frequency resource consists of a frequency resource with a size of $W_G$ from the starting point of configuring the second frequency resource within the second frequency resource used as UL. For example, the guard frequency resource is determined to be composed of $W_G$ consecutive RBs in the direction in which the RB index increases from the lowest RB constituting the second frequency resource.

2) The UE determines that the guard frequency resource consists of a frequency resource with a size of $W_G$ from the last point that constitutes the second frequency resource within the second frequency resource used as UL. For example, the guard frequency resource is determined to be composed of $W_G$ consecutive RBs in a direction in which the RB index decreases from the largest RB constituting the second frequency resource.

3) The UE determines that the guard frequency resource consists of, within the second frequency resource used as a UL, a frequency resource having the size of a $W_G$ from the starting point constituting the second frequency resource and a frequency resource having the size of a $W_G$ from the last point constituting the second frequency resource. For example, the UE determines that the guard frequency resource constitutes $W_G$ consecutive RBs in a direction of increasing RB index from the lowest RB constituting the second frequency resource and $W_G$ consecutive RBs in a direction of decreasing RB index from the largest RB constituting the second frequency resource.

At this time, the $W_G$ can be replaced with $W_G/2$ (or floor($W_G/2$)) or ceil($W_G/2$)).

Additionally, the location information of the guard frequency resource can be indicated as follows. The network indicates one of the following frequency location information, and the UE can determine the location and/or presence of guard frequency resources according to these indications. These indications may be configured to indicate some of the following information.

i) the guard frequency resource does not exist, ii) the guard frequency resource exists at the starting point of the second frequency resource. In this case, the guard frequency resource is located as in 1) of Method 2-1 above, iii) the guard frequency resource exists at the end point of the second frequency resource. In this case, the guard frequency resource is located as in 2) of method 2-1 above, iv) the guard frequency resource is present at the start and end points of the second frequency resource. In this case, the guard frequency resource is located as in 3) of method 2-1 above.

Method 2-2. When the size of the guard frequency resource received by the UE from the network is $W_G$, the UE may determine that the guard frequency resource is located within the first frequency resource used as DL as follows.

1) The UE determines that the guard frequency resource consists of a frequency resource with a size of $W_G$ from the starting point of constituting the first frequency resource within the first frequency resource used as UL. For example, it is determined that the guard frequency resource is composed of $W_G$ consecutive RBs in the direction in which the RB index increases from the lowest RB constituting the first frequency resource.

2) The UE determines that the guard frequency resource consists of a frequency resource with a size of $W_G$ from the last point constituting the first frequency resource within the first frequency resource used as UL. For example, it is determined that the guard frequency resource is composed of $W_G$ consecutive RBs in a direction in which the RB index decreases from the largest RB constituting the first frequency resource.

3) The UE determines that, within the first frequency resource used as a UL, the guard frequency resource consists of a frequency resource having a size of $W_G$ from the starting point comprising the first frequency resource and a frequency resource having a size of $W_G$ from the last point comprising the first frequency resource. For example, determine that the guard frequency resource comprises $W_G$ consecutive RBs in a direction of increasing RB index from the lowest RB constituting the first frequency resource and $W_G$ consecutive RBs in a direction of decreasing RB index from the largest RB constituting the first frequency resource.

At this time, the $W_G$ can be replaced with $W_G/2$ (or floor($W_G/2$)) or ceil($W_G/2$))).

Additionally, the location information of the guard frequency resource can be indicated as follows. The network may indicate one of the following frequency location information, and the UE may determine the location and/or presence of a guard frequency resource according to this indication. These indications may be configured to indicate some of the following information.

i) the guard frequency resource does not exist, ii) the guard frequency resource exists at the starting point of the second frequency resource. In this case, the guard frequency resource is located as in 1) of Method 2-1 above, iii) the guard frequency resource exists at the end point of the second frequency resource. In this case, the guard frequency resource is located as in 2) of method 2-1 above, iv) the guard frequency resource is present at the start and end points of the second frequency resource. In this case, the guard frequency resource is located as in 3) of method 2-1 above.

Additionally, in relation to guard frequency resources, information on which of the above-described methods of 1) locating within the second frequency resource and 3) locating within the first frequency resource is applied can be set from the network. According to this configuration information, the UE can apply the method of 1) locating within the second frequency resource or apply the method of 3) locating within the first frequency resource in relation to the guard frequency resource.

Method 2-3. The UE can determine the guard frequency resource as follows. When the size of the guard frequency resource is $W_G$, the UE determines that the guard frequency resource is located at the boundary between the first frequency resource and the second frequency resource. At this time, the location of the guard frequency resource may be as follows.

1) At the boundary between the first frequency resource and the second frequency resource, it is determined that a guard frequency resource with a size of $W_G$ is located in the first frequency resource.

2) At the boundary between the first frequency resource and second frequency resource, it is determined that a guard frequency resource with a size of $W_G$ is located in the second frequency resource.

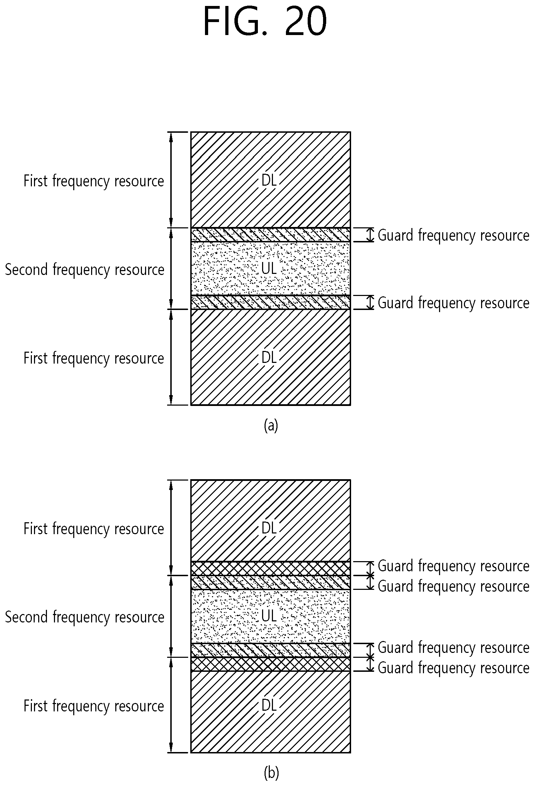

FIG. 20 shows an example of guard frequency resource configurations.

Referring to (a) of FIG. 20, at the boundary between the first frequency resource and the second frequency resource, a guard frequency resource with a size of $W_G$ is located in the second frequency resource.

3) At the boundary of the first frequency resource and the second frequency resource, determine that a guard frequency resource of size $W_G$ is located in the frequency resource consisting of the PRB resources with the smaller index among the first frequency resource and the second frequency resource.

4) At the boundary of the first frequency resource and the second frequency resource, determine that a guard frequency resource of size $W_G$ is located in the frequency resource consisting of the PRB resources with the larger index among the first frequency resource and the second frequency resource.

5) At the boundary between the first frequency resource and the second frequency resource, assume that guard frequency resources with sizes of $W_G$ or $W_G/2$ (or floor($W_G/2$)) or ceil($W_G/2$)) are located in the first frequency resource and the second frequency, respectively.

An example of such guard frequency resource configurations is shown in (b) of FIG. 20. In FIG. 20, the resources (1) and (2) are used as guard frequency resources, and the resource (1) located in the first frequency resource and resource (2) located in the second frequency resource may each have a size of $W_G$.

6) At the boundary of the first frequency resource and the second frequency resource, determine that a guard frequency resource with size $W_{G,D}$ is located in the first frequency resource and a guard frequency resource with size $W_{G,U}$ is located in the second frequency resource. In this case, the size of $W_{G,D}$ and $W_{G,U}$ may be set to the UE from the network, respectively. An example of such a guard frequency resource setup is shown in (b) of FIG. 20. In this case, in FIG. 20, the resource (1) and the resource (2) are used as guard frequency resources, and the resource (1) located at the first frequency resource may have a size of $W_{G,D}$ and the resource (2) located at the second frequency resource may have a size of $W_{G,U}$, respectively.

[Method 3] The UE determines a part of the first frequency resource and/or the second frequency resource as a guard frequency resource in addition to the basic guard frequency resource.

Guard frequency resources applied by the UE may consist of basic guard frequency resources and additional guard frequency resources.

To this end, the network can set information about basic guard frequency resources and additional guard frequency resources to the UE.

The basic guard frequency resource may be a guard frequency resource that is cell-specifically determined according to the cell's capabilities. Additionally, if additional guard frequency resources are required depending on the capabilities of the UE, additional guard frequency resources may be located.

The basic guard frequency resource is set as in [Method 1] above, and if necessary, additional guard frequency resources can be set as in [Method 2] above. That is, if a first frequency resource, a second frequency resource, and a basic guard frequency resource are set from the perspective of the UE, and furthermore, an additional guard frequency resource is set, the additional guard frequency resource may be located at the first frequency resource and/or the second frequency resource.

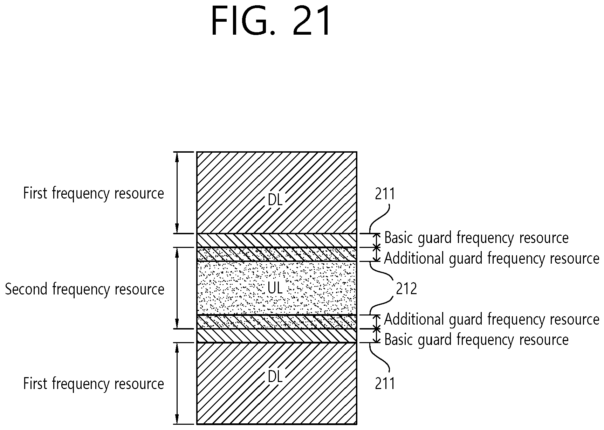

FIG. 21 is another example of a guard frequency resource.

Referring to FIG. 21, a basic guard frequency resource 211 is located between the first frequency resource and the second frequency resource. At this time, when the UE receives configurations for an additional guard frequency resource, it may determine that an additional guard frequency resource 212 exists in addition to the second frequency resource. As a result, the UE uses a wider frequency resource as a guard frequency resource than the basic guard frequency resource.

Alternatively, the basic guard frequency resource is set as in [Method 2] above, and if necessary, additional guard frequency resources may be set in the first frequency resource and/or the second frequency resource. That is, from the UE's perspective, the basic guard frequency resource may be located in the first frequency resource and/or the second frequency resource. In this case, when an additional guard frequency resource is set, the additional guard frequency resource may be located in the first frequency resource and/or the second frequency resource. For example, a basic guard frequency resource of $W_{G1}$ size may be located in the second frequency resource at the boundary between the first and second frequency resources. At this time, when the UE receives configurations for additional guard frequency resources, it may determine that an additional guard frequency resource of the size of $W_{G2}$ exists in addition to the second frequency resource. As a result, the UE may determine that a guard frequency resource of size $W_{G1} + W_{G2}$ exists in the second frequency resource.

Section B. Information exchange to determine the size of guard frequency resources

In order to reduce the impact of base station-to-base station CLI between adjacent subbands received from other cells, there is a need to lower the emission level of the DL signal transmitted by the base station in the DL subband (first frequency resource) to the UL subband (second frequency resource) below a certain level. The ratio of this transmitted signal power to the power radiated by the transmitted signal to the neighboring subbands is called the Adjacent Channel Leakage power Ratio (ACLR) for convenience.

The base station is required to be the ACLR to the UL subband (i.e., $ACLR_{base\ station}$) below a certain value when transmitting DL signals. In addition, when receiving UL signals, the base station may need to reduce the level of signals received from frequency resources outside the UL subband (second frequency resources) below a certain level to reduce the impact of signals received from frequency resources outside the UL subband on UL reception in the UL subband. This means that it is needed to reduce the amount of signal received from neighboring subbands below a certain level. The ratio of the power of these received signals to the power of signals received in neighboring subbands is called adjacent channel selection (ACS) for convenience. When receiving UL signals, the base station needs to receive ACS (i.e., $ACS_{base\ station}$) from frequency resources outside the UL subband (or DL subband) to be below a certain value.

To reduce the impact of UE-to-UE CLI between neighboring subbands received from other cells, it is necessary to reduce the magnitude of radiation from UL signals transmitted by the UE in the UL subband (second frequency resource) to the DL subband (first frequency resource) below a certain level, similar to the previous point. In other words, the UE needs to transmit the ACLR to the DL subband (i.e., $ACLR_{UE}$) below a certain value when transmitting UL signals. In addition, when receiving DL signals, the UE may need to reduce the level of signals received outside the DL subband (first frequency resource) to a level below a certain level in order to reduce the impact of signals received in frequency resources outside the DL subband on DL reception in the DL subband. In other words, when receiving a DL signal, the UE needs to receive ACS (i.e., $ACS_{UE}$) on frequency resources outside the DL subband (or UL subband) so that it is below a certain value.

Guard frequency resources can be co-located between cells to reduce the impact of base station-to-base station CLI between adjacent subbands and/or UE-to-UE CLI between adjacent subbands received from other cells, or to reduce the impact of base station-to-base station CLI between adjacent subbands and/or UE-to-UE CLI between adjacent subbands on other cells. In other words, cells can locate guard frequency resources at mutually agreed locations.

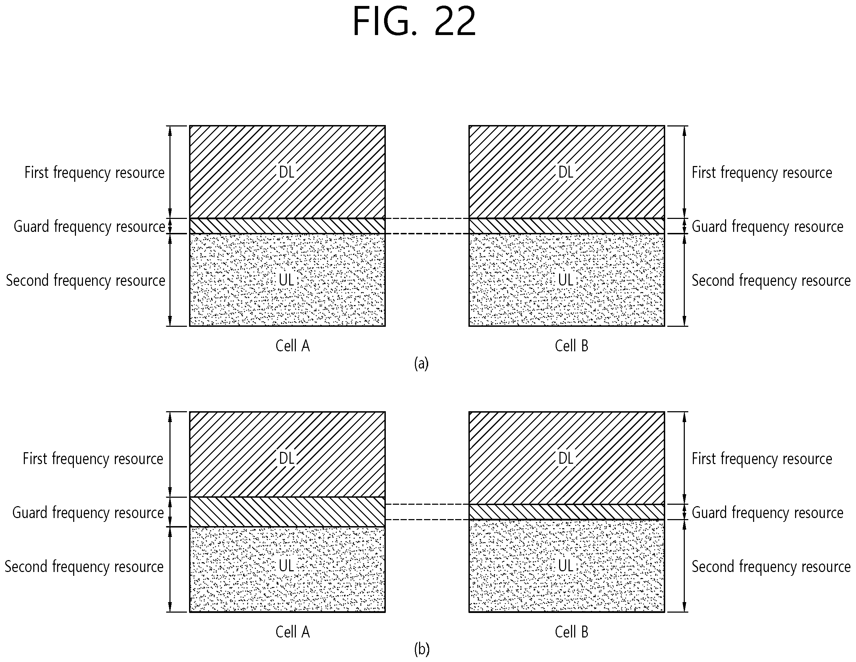

FIG. 22 is an example of setting guard frequency resources.

Referring to (a) of FIG. 22, it shows an example in which the first and second frequency resources are configured to be the same between Cell A and Cell B, and the guard frequency resource is also configured to be the same frequency resource.

In this case, in order to apply a common guard frequency resource between cells, the size and location information of the guard frequency resource may be shared between base stations or defined in a standard specification. A base station can send information to other base stations about the guard frequency resources it needs. This information can specifically include the following

i) Information about the size of guard frequency resources (for example, the number of RBs of guard frequency resources) can be shared. Information on the size of these frequency resources may refer to $W_G$, $W_{G,D}$, and/or $W_{G,U}$ described in Section A above. Additionally, information about reference subcarrier spacing can be shared.
ii) Information about the location of guard frequency resources can be shared. Information about the location of these frequency resources may refer to information about the 'frequency start location' described in Section A above. Considering the possibility that the location of the guard frequency resource is determined depending on the location of the first frequency resource and/or the second frequency resource, information about the location of the first frequency resource and/or the second frequency resource may be shared.

Meanwhile, because there are differences in capabilities between base stations, the amount of guard subbands required to satisfy a specific $ACLR_{base\ station}$ and $ACS_{base\ station}$ may vary for each base station. For example, there are differences in the subband filters used between base stations, so the amount of guard subbands to satisfy the required $ACLR_{base\ station}$ and $ACS_{base\ station}$ may be different. Considering this case, the location and/or size of guard frequency resources applied between cells may be different. Referring to (b) of FIG. 22, cell A and cell B may have guard frequency resources of different sizes. In this case, the size and/or location of the guard frequency resource may be applied cell-specifically, and this information may be cell-specifically set to the UE.

Alternatively, because there are differences in capabilities between UEs, the amount of guard subbands required to satisfy a specific $ACLR_{UE}$ and $ACS_{UE}$ may vary depending on the UE. Considering this case, the location and/or size of guard frequency resources applied between UEs may be different. In this case, the size and/or location of the guard frequency resource can be applied UE-specifically, and this information can be set UE-specifically for the UE.

When the size of the guard frequency resource is set UE-specifically for the UE, the network needs to determine the size of the guard frequency resource needed by the UE. To this end, the UE can report or request information about the size of the required guard frequency resources to the base station. In this case, the UE can specifically transmit the following information to the base station.

The UE may transmit information about the size of the guard frequency resource needed (for example, the number of RBs of the guard frequency resource). Information on the size of these frequency resources may refer to $W_G$, $W_{G,D}$, and/or $W_{G,U}$ described in Section A above. Additionally, information about reference subcarrier spacing can be shared.

Information about the size of additional guard frequency resources required compared to the size of the guard frequency resource currently applied can be transmitted. And/or information about the size of unnecessary guard frequency resources may be transmitted compared to the size of the guard frequency resource currently applied. Information about these frequency resources may refer to the 'additional guard frequency resource' described in Section A above.

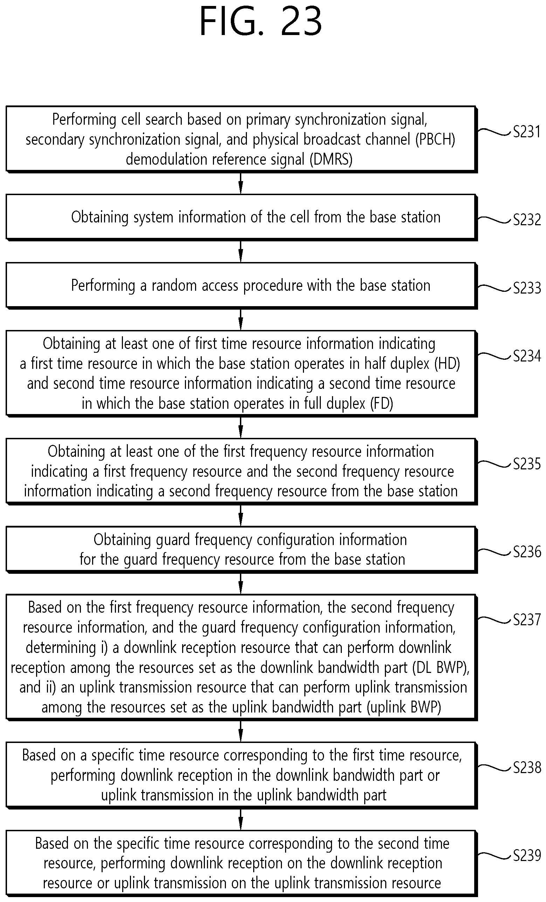

FIG. 23 illustrates a method of operating a UE in a wireless communication system.

Referring to FIG. 23, the UE performs cell search (S231). Cell search is a procedure in which a UE acquires time and frequency synchronization with a cell and detects the cell ID (identity) of the cell. Cell search may be based on the cell's primary synchronization signal, secondary synchronization signal, and physical broadcast channel (PBCH) demodulation reference signal (DMRS). A specific cell may be selected by cell search.

The UE obtains system information of the cell from the base station (S232).

The UE performs a random access procedure with the base station (S233). The random access procedure may include contention-based random access (CBRA) and contention-free random access (CFRA). CBRA may have a 4-step random access type and a 2-step random access type. CFRA may also have a 4-step random access type and a 2-step random access type.

A 4-step random access type of CBRA may comprise: i) the UE transmitting a random access preamble to a base station, ii) receiving a random access response from the base station, iii) performing a scheduled transmission using a scheduled uplink grant from the random access response, and iv) receiving a contention resolution message.

The 2-step random access type of CBRA includes the steps of i) the UE transmitting a random access preamble and PUSCH payload to the base station, and ii) receiving a contention resolution message from the base station.

The 4-step random access type of CFRA may include: i) a base station transmitting a random access preamble assignment to a UE; ii) the UE transmitting a random access preamble to the base station; and iii) the base station transmitting a random access response to the UE.

The 2-step random access type of CFRA may comprise: i) a base station transmitting a random access preamble and an allocation of PUSCH to a UE; ii) the UE transmitting a random access preamble and a PUSCH payload to the base station; and iii) receiving a random access response from the base station.

The UE obtains from the base station, at least one of first time resource information indicating a first time resource in which the base station operates in half duplex (HD) and second time resource information indicating a second time resource in which the base station operates in full duplex (FD) (S234).

The UE obtains at least one of the first frequency resource information indicating a first frequency resource and the second frequency resource information indicating a second frequency resource from the base station (S235).

The UE obtains guard frequency configuration information for the guard frequency resource from the base station (S236).

For example, the resource size of the frequency domain of the guard frequency resource may be the same in all bandwidth portions (BWPs) allocated to the UE. The location of the frequency domain of the guard frequency resource may be given as a relative value to a common reference point for the resource block grid of the cell. The guard frequency resource can be applied independently according to each bandwidth portion (BWP) allocated to the UE.

This has been explained in detail in "Section A. A method for the UE to determine guard frequency resource',' Section B. Information exchange to determine the size of guard frequency resources '.

Based on the first frequency resource information, the second frequency resource information, and the guard frequency configuration information, the UE determines i) a downlink reception resource that can perform downlink reception among the resources set as the downlink bandwidth part (DL BWP), and ii) an uplink transmission resource that can perform uplink transmission among the resources set as the uplink bandwidth part (uplink BWP) (S237).

The downlink reception resource may be a resource excluding at least a portion of the guard frequency resources from the second frequency resource. The uplink transmission resource may be a resource excluding at least a portion of the guard frequency resources from the second frequency resource.

For example, the UE may determine the location and amount of the guard subband resource for the corresponding cell based on the first frequency resource information, the second frequency resource information, and the guard frequency configuration information, and if the set guard frequency resource overlaps with the first frequency resource and/or the second frequency resource, the UE may determine that the resource set as the guard frequency resource is excluded from the first frequency resource and/or the second frequency resource. Alternatively, it may be determined that transmission and reception are not performed on the corresponding guard subband resource.

For methods of determining guard frequency resources in this process are described in 'Section A. A method for the UE to determine guard frequency resource' and ' Section B. Information exchange to determine the size of guard frequency resources'.

If a specific time resource corresponds to the first time resource, the UE performs downlink reception in the downlink bandwidth part or uplink transmission in the uplink bandwidth part (S238).

If the specific time resource corresponds to the second time resource, the UE performs downlink reception on the downlink reception resource or uplink transmission on the uplink transmission resource (S239).

That is, the UE may determine that the configuration for the guard frequency resource applies only to the second time resource and not to the first time resource. That is, it may be determined that the guard frequency resource is not applied to the first time resource and that the frequency resource set as the guard frequency resource is used for DL or UL. On the other hand, by applying the set guard frequency resource to the second time resource, it may be determined that DL reception and/or UL transmission is not performed on the guard frequency resource.

Although not shown in FIG. 23, implementation examples may further include the step of reporting or requesting to the base station the amount of guard frequency resources required by the UE. The base station may generate guard frequency configuration information by considering the amount of guard frequency resources reported or requested by the UE.

In this way, in NRs supporting full-duplex operation, the impact of interference between sub-bands can be reduced, resulting in higher transmit and receive performance.

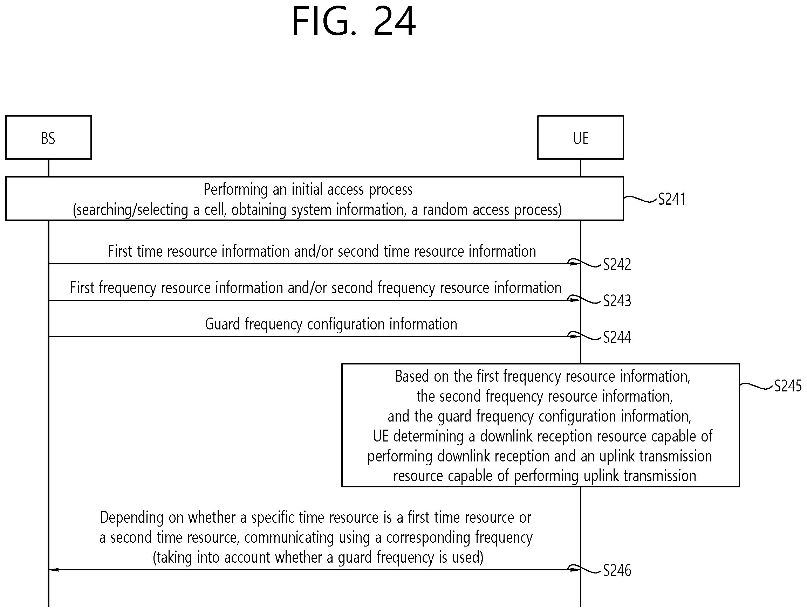

FIG. 24 illustrates a signaling process between a base station and a UE in implementing the method of FIG. 23.

Referring to FIG. 24, the base station and the UE perform an initial access process (e.g., searching/selecting a cell, obtaining system information, and performing a random access process on the UE side, and transmitting a synchronization signal/PBCH, transmitting system information, and performing a random access process on the base station side) (S241).

For example, when a base station performs a random access procedure with a UE, the random access procedure may comprise: i) the base station receiving a random access preamble from the UE; ii) sending a random access response to the UE; iii) receiving a transmission from the UE scheduled by an uplink grant included in the random access response; and iv) sending a contention resolution message to the UE. However, this is only an example, and of course other types of random access procedures can be performed. For this, refer to process S233 of FIG. 23.

The base station transmits to the UE, at least one of first time resource information indicating a first time resource in which the base station operates in half duplex (HD) and second time resource information indicating a second time resource in which the base station operates in full duplex (FD) (S242).

The base station transmits at least one of the first frequency resource information indicating a first frequency resource and the second frequency resource information indicating a second frequency resource to the UE (S243).

The base station transmits guard frequency configuration information for the guard frequency resource to the UE (S244).

Based on the first frequency resource information, the second frequency resource information, and the guard frequency configuration information, the UE determines a downlink reception resource capable of performing downlink reception among the resources set to the downlink bandwidth part (DL BWP) and an uplink transmission resource capable of performing uplink transmission among the resources set to the uplink bandwidth part (uplink BWP) (S245).

Although not shown in FIG. 24, the base station also determines/identifies, based on the first frequency resource information, the second frequency resource information, and the guard frequency configuration information, a downlink reception resource on which the UE can perform downlink reception among the resources set as a downlink bandwidth part (DL BWP) to the UE, and an uplink transmission resource on which the UE can perform uplink transmission among the resources set as an uplink bandwidth part (uplink BWP) to the UE.

Depending on whether a specific time resource is a first time resource or a second time resource, the base station and the UE perform communication using a corresponding frequency (taking into account whether a guard frequency is used) (S246).

If a specific time resource corresponds to the first time resource, the base station may perform downlink transmission to the UE in the downlink bandwidth part or uplink reception from the UE in the uplink bandwidth part.

When the specific time resource corresponds to the second time resource, the base station may perform downlink transmission to the UE at the downlink reception resource and uplink reception from another UE at the uplink transmission resource, or may perform uplink reception from the UE at the uplink transmission resource and downlink transmission to another UE at the downlink reception resource (i.e., the base station may perform FD operation).

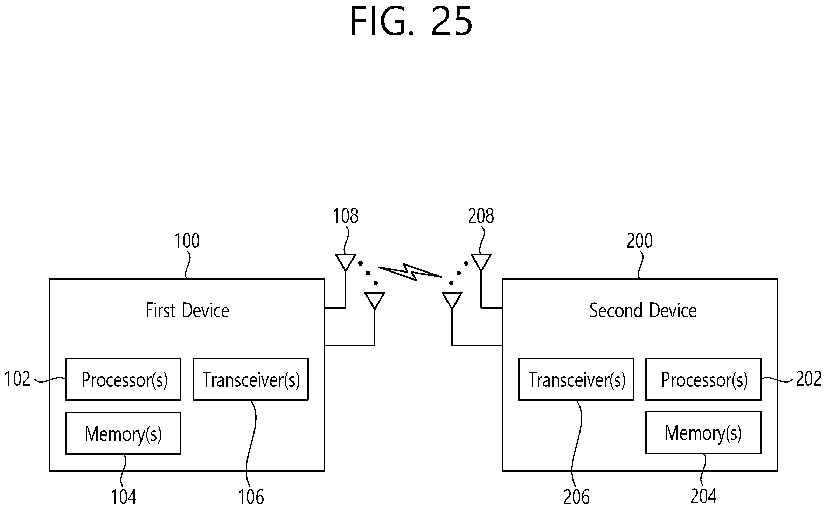

FIG. 25 illustrates a wireless device applicable to the present specification.

Referring to FIG. 25, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: performing a cell search, the cell search being a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell, obtains system information of the cell from a base station, performs a random access procedure with the base station, the random access procedure including i) transmitting a random access preamble to the base station, ii) receiving a random access response from the base station, iii) performing scheduled transmission using a scheduled uplink grant in the random access response, and iv) receiving a contention resolution message, obtains at least one of first time resource information indicating a first time resource on which the base station operates in half duplex (HD) and second time resource information indicating a second time resource on which the base station operates in full duplex (FD) from the base station, obtains at least one of first frequency resource information indicating a first frequency resource and second frequency resource information indicating a second frequency resource from the base station, obtains guard frequency configuration information for a guard frequency resource from the base station, determines a downlink reception resource capable of performing downlink reception among the resources configured as a downlink bandwidth part (BWP) and an uplink transmission resource capable of performing uplink transmission among the resources configured as an uplink BWP, based on the first frequency resource information, the second frequency resource information and the guard frequency configuration information, performs downlink reception in the downlink BWP or uplink transmission in the uplink BWP based on a specific time resource corresponding to the first time resource and performs downlink reception in the downlink reception resource or uplink transmission in the uplink transmission resource based on the specific time resource corresponding to the second time resource.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

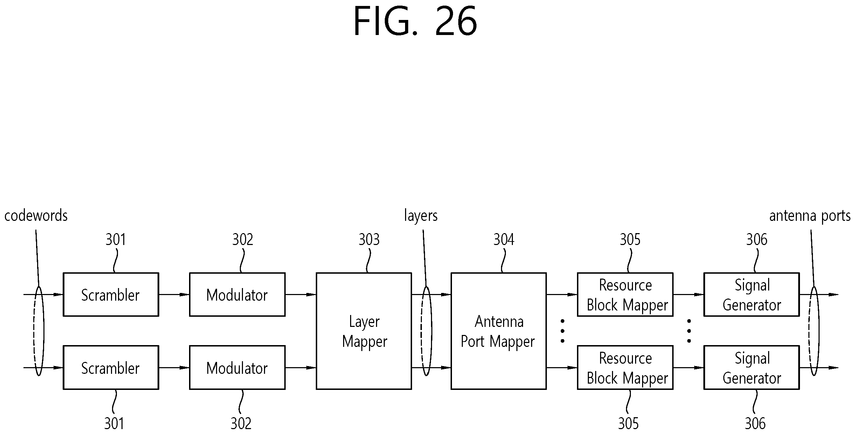

FIG. 26 shows an example of a structure of a signal processing module. Herein, signal processing may be performed in the processors 102 and 202 of FIG. 25.

Referring to FIG. 26, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

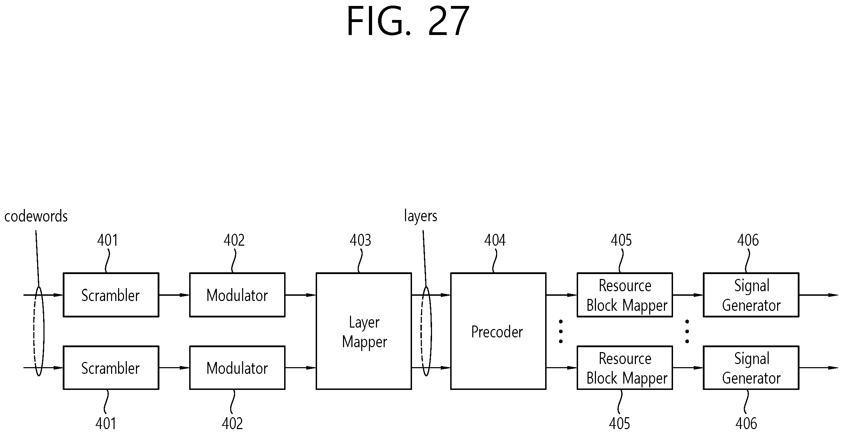

FIG. 27 shows another example of a structure of a signal processing module in a transmitting device. Herein, signal processing may be performed in a processor of a UE/BS, such as the processors 102 and 202 of FIG. 25.

Referring to FIG. 27, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

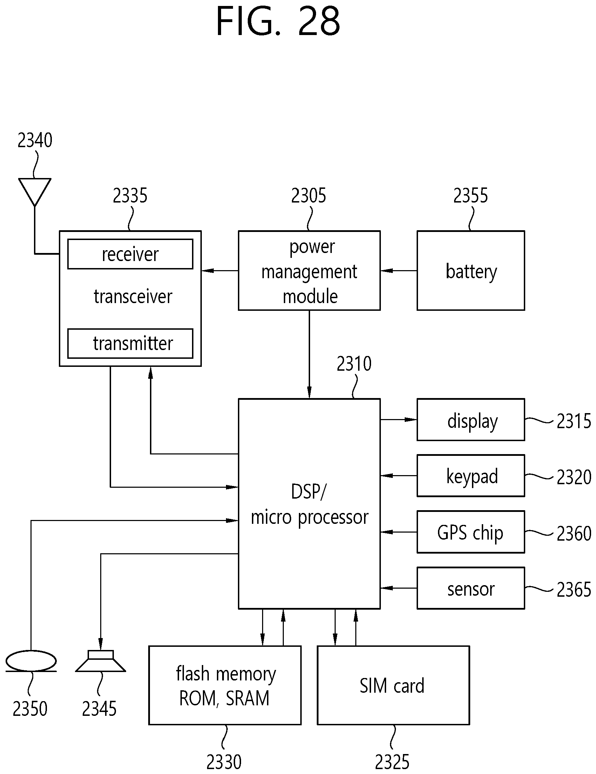

FIG. 28 illustrates an example of a wireless communication device according to an implementation example of the present disclosure.

Referring to FIG. 28, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 28 may be the processors 102 and 202 in FIG. 25.

The memory 2330 is connected to the processor 2310 and stores information related to operations of the processor. The memory may be located inside or outside the processor and connected to the processor through various techniques such as wired connection and wireless connection. The memory 2330 in FIG. 28 may be the memories 104 and 204 in FIG. 25.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

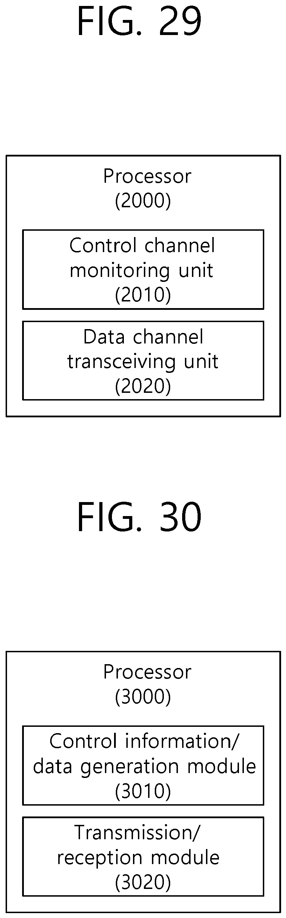

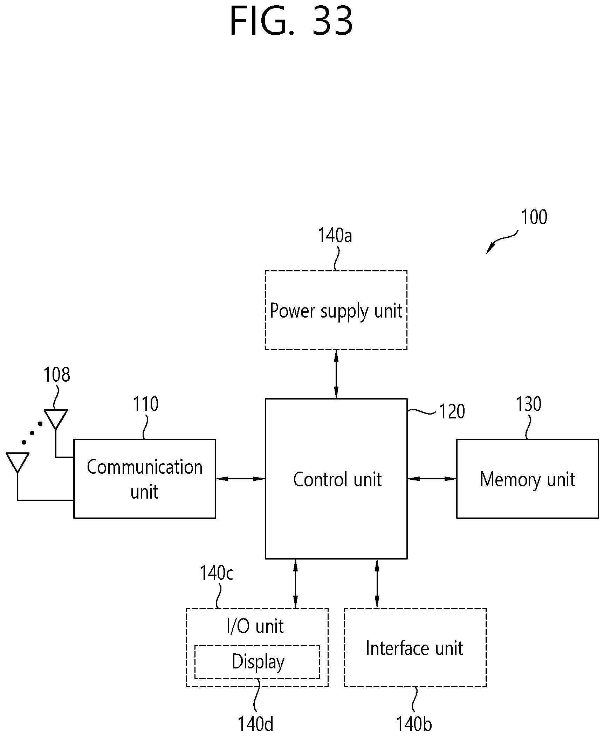

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 33 may be the transceivers 106 and 206 in FIG. 30.

Although not shown in FIG. 28, various components such as a camera and a universal serial bus (USB) port may be additionally included in the UE. For example, the camera may be connected to the processor 2310.

FIG. 28 is an example of implementation with respect to the UE and implementation examples of the present disclosure are not limited thereto. The UE need not essentially include all the components shown in FIG. 28. That is, some of the components, for example, the keypad 2320, the GPS chip 2360, the sensor 2365 and the SIM card 2325 may not be essential components. In this case, they may not be included in the UE.

FIG. 29 shows an example of the processor 2000.

Referring to FIG. 29, the processor 2000 may include a control channel monitoring unit 2010 and a data channel transceiving unit 2020. The processor 2000 may execute the methods (for example, receiver's perspective) described in FIGS. 23 and 24. For example, the processor 2000 performs a cell search, obtains system information of the cell from a base station, performs a random access procedure with the base station. And, the processor 2000 obtains at least one of first time resource information indicating a first time resource on which the base station operates in half duplex (HD) and second time resource information indicating a second time resource on which the base station operates in full duplex (FD) from the base station, obtains at least one of first frequency resource information indicating a first frequency resource and second frequency resource information indicating a second frequency resource from the base station, obtains guard frequency configuration information for a guard frequency resource from the base station, determines a downlink reception resource capable of performing downlink reception among the resources configured as a downlink bandwidth part (BWP) and an uplink transmission resource capable of performing uplink transmission among the resources configured as an uplink BWP, based on the first frequency resource information, the second frequency resource information and the guard frequency configuration information, performs downlink reception in the downlink BWP or uplink transmission in the uplink BWP if a specific time resource corresponds to the first time resource, and performs downlink reception in the downlink reception resource or uplink transmission in the uplink transmission resource if the specific time resource corresponds to the second time resource.

The processor 2000 may be an example of the processors 102 and 202 of FIG. 25.

FIG. 30 shows an example of the processor 3000.

Referring to FIG. 30, the processor 3000 may include a control information/data generation module 3010 and a transmission/reception module 3020. The processor 3000 may execute the methods described in FIGS. 23 and 24 from the transmitter's perspective. For example, the processor 3000 connects with the UE by performing an initial connection procedure (including a random access procedure), transmits at least one of first time resource information indicating a first time resource on which the base station operates in half duplex (HD) and second time resource information indicating a second time resource on which the base station operates in full duplex (FD) to the UE, transmits at least one of first frequency resource information indicating a first frequency resource and second frequency resource information indicating a second frequency resource to the UE, transmits guard frequency configuration information for a guard frequency resource to the UE, determins a downlink reception resource capable of performing downlink reception by the UE among the resources configured as a downlink bandwidth part (BWP) and an uplink transmission resource capable of performing uplink transmission by the UE among the resources configured as an uplink BWP, based on the first frequency resource information, the second frequency resource information and the guard frequency configuration information, performs downlink transmission to the UE in the downlink BWP or uplink reception form the UE in the uplink BWP if a specific time resource corresponds to the first time resource and performs i) downlink transmission to the UE in the downlink reception resource and uplink reception from another UE in the uplink transmission resource or ii) uplink reception from the UE in the uplink transmission resource and downlink transmission to the another UE in the downlink reception resource, if the specific time resource corresponds to the second time resource.

The processor 3000 may be an example of the processors 102 and 202 of FIG. 25.

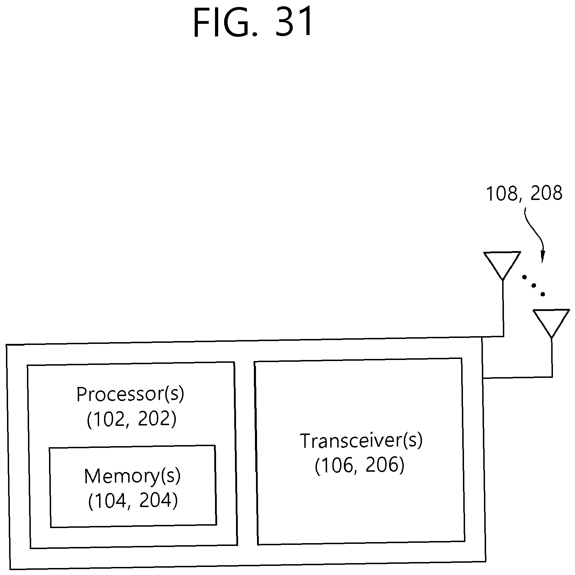

FIG. 31 shows another example of a wireless device.

Referring to FIG. 31, the wireless device may include one or more processors 102 and 202, one or more memories 104 and 204, one or more transceivers 106 and 206 and one or more antennas 108 and 208.

The example of the wireless device described in FIG. 31 is different from the example of the wireless described in FIG. 25 in that the processors 102 and 202 and the memories 104 and 204 are separated in FIG. 25 whereas the memories 104 and 204 are included in the processors 102 and 202 in the example of FIG. 31. That is, the processor and the memory may constitute one chipset.

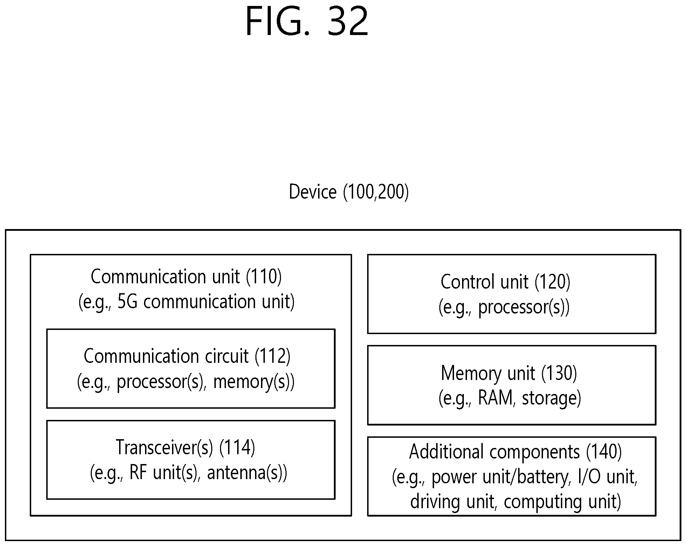

FIG. 32 shows another example of a wireless device applied to the present specification. The wireless device may be implemented in various forms according to a use-case/service.

Referring to FIG. 32, wireless devices 100 and 200 may correspond to the wireless devices 100 and 200 of FIG. 25 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 25. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

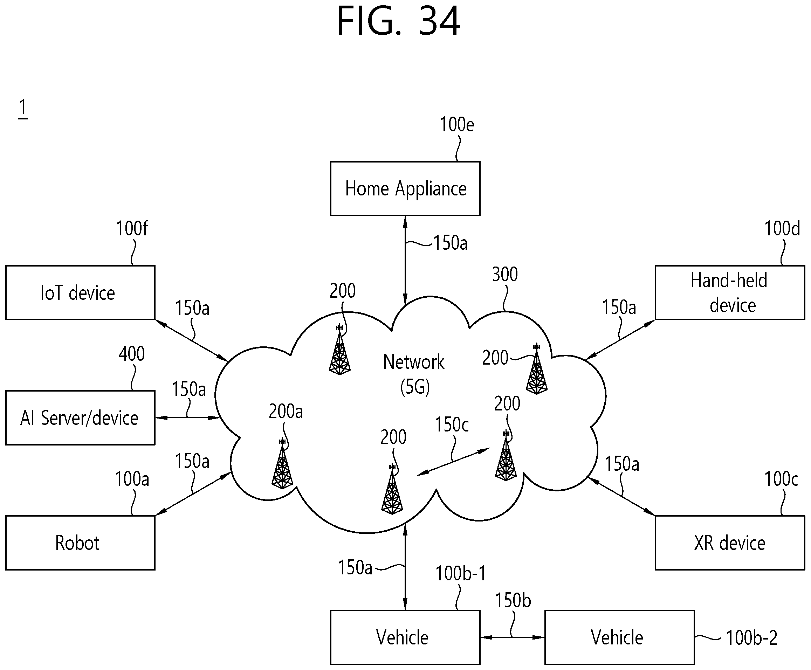

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 32, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory, volatile memory) and/or a combination thereof.

FIG. 33 illustrates a hand-held device applied to the present specification. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 33, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c respective correspond to the blocks 110 to 130/140 of FIG. 32.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. In addition, the memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

For example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. In addition, the communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

FIG. 34 illustrates a communication system 1 applied to the present specification.

Referring to FIG. 34, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 5. For convenience of explanation, among the frequency ranges that are used in an NR system, FR1 may mean a "sub 6GHz range", and FR2 may mean an "above 6GHz range" and may also be referred to as a millimeter wave (mmW).

[Table 5]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 6 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 6]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of operating a user equipment (UE) in a wireless communication system, the method comprising:

performing a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
obtaining system information of the cell from a base station;
performing a random access procedure with the base station, wherein the random access procedure includes i) transmitting a random access preamble to the base station, ii) receiving a random access response from the base station, iii) performing scheduled transmission using a scheduled uplink grant in the random access response, and iv) receiving a contention resolution message;
obtaining at least one of first time resource information indicating a first time resource on which the base station operates in half duplex (HD) and second time resource information indicating a second time resource on which the base station operates in full duplex (FD) from the base station;
obtaining at least one of first frequency resource information indicating a first frequency resource and second frequency resource information indicating a second frequency resource from the base station;
obtaining guard frequency configuration information for a guard frequency resource from the base station;
determining a downlink reception resource capable of performing downlink reception among the resources configured as a downlink bandwidth part (BWP) and an uplink transmission resource capable of performing uplink transmission among the resources configured as an uplink BWP, based on the first frequency resource information, the second frequency resource information and the guard frequency configuration information;
performing downlink reception in the downlink BWP or uplink transmission in the uplink BWP based on a specific time resource corresponding to the first time resource; and
performing downlink reception in the downlink reception resource or uplink transmission in the uplink transmission resource based on the specific time resource corresponding to the second time resource.

2. The method of claim 1, wherein the downlink reception resource is a resource that excludes at least some of the guard frequency resource from the second frequency resource.

3. The method of claim 1, wherein the uplink transmission resource is a resource that excludes at least some of the guard frequency resource from the second frequency resource.

4. The method of claim 1, wherein a frequency domain resource size of the guard frequency resource is a same for all BWPs allocated to the UE.

5. The method of claim 1, wherein a frequency domain position of the guard frequency resource is given as a value relative to a common reference point for a resource block grid of the cell.

6. The method of claim 1, wherein the guard frequency resource is applied independently according to each BWP allocated to the UE.

7. The method of claim 1, wherein the UE reports an amount of guard frequency resource required by the UE to the base station.

8. The method of claim 1, wherein the UE requests an amount of guard frequency resource required by the UE to the base station.

9. A user equipment (UE), the UE comprising:

a transceiver;
at least one memory; and
at least one processor operably coupled to the at least one memory and the transceiver, wherein the processor is adapted to:

perform a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
obtain system information of the cell from a base station;
perform a random access procedure with the base station, wherein the random access procedure includes i) transmitting a random access preamble to the base station, ii) receiving a random access response from the base station, iii) performing scheduled transmission using a scheduled uplink grant in the random access response, and iv) receiving a contention resolution message;
obtain at least one of first time resource information indicating a first time resource on which the base station operates in half duplex (HD) and second time resource information indicating a second time resource on which the base station operates in full duplex (FD) from the base station;
obtain at least one of first frequency resource information indicating a first frequency resource and second frequency resource information indicating a second frequency resource from the base station;
obtain guard frequency configuration information for a guard frequency resource from the base station;
determine a downlink reception resource capable of performing downlink reception among the resources configured as a downlink bandwidth part (BWP) and an uplink transmission resource capable of performing uplink transmission among the resources configured as an uplink BWP, based on the first frequency resource information, the second frequency resource information and the guard frequency configuration information;
perform downlink reception in the downlink BWP or uplink transmission in the uplink BWP based on a specific time resource corresponding to the first time resource; and
perform downlink reception in the downlink reception resource or uplink transmission in the uplink transmission resource based on the specific time resource corresponding to the second time resource.

10. The UE of claim 9, wherein the downlink reception resource is a resource that excludes at least some of the guard frequency resource from the second frequency resource.

**EP 4 373 187 A1**

11. The UE of claim 9, wherein the uplink transmission resource is a resource that excludes at least some of the guard frequency resource from the second frequency resource.

12. The UE of claim 9, wherein a frequency domain resource size of the guard frequency resource is a same for all BWPs allocated to the UE.

13. The UE of claim 9, wherein a frequency domain position of the guard frequency resource is given as a value relative to a common reference point for a resource block grid of the cell.

14. The UE of claim 9, wherein the guard frequency resource is applied independently according to each BWP allocated to the UE.

15. The UE of claim 9, wherein the UE reports an amount of guard frequency resource required by the UE to the base station.

16. The UE of claim 9, wherein the UE requests an amount of guard frequency resource required by the UE to the base station.

17. An apparatus of a user equipment (UE), the apparatus comprising:

at least one memory; and
at least one processor operably coupled to the at least one memory,
wherein the processor is adapted to:

perform a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
obtain system information of the cell from a base station;
perform a random access procedure with the base station, wherein the random access procedure includes i) transmitting a random access preamble to the base station, ii) receiving a random access response from the base station, iii) performing scheduled transmission using a scheduled uplink grant in the random access response, and iv) receiving a contention resolution message;
obtain at least one of first time resource information indicating a first time resource on which the base station operates in half duplex (HD) and second time resource information indicating a second time resource on which the base station operates in full duplex (FD) from the base station;
obtain at least one of first frequency resource information indicating a first frequency resource and second frequency resource information indicating a second frequency resource from the base station;
obtain guard frequency configuration information for a guard frequency resource from the base station;
determine a downlink reception resource capable of performing downlink reception among the resources configured as a downlink bandwidth part (BWP) and an uplink transmission resource capable of performing uplink transmission among the resources configured as an uplink BWP, based on the first frequency resource information, the second frequency resource information and the guard frequency configuration information;
perform downlink reception in the downlink BWP or uplink transmission in the uplink BWP based on a specific time resource corresponding to the first time resource; and
perform downlink reception in the downlink reception resource or uplink transmission in the uplink transmission resource based on the specific time resource corresponding to the second time resource.

18. At least one computer readable medium (CRM) having instructions to be executed by at least one processor to perform operations includes:

performing a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
obtaining system information of the cell from a base station;
performing a random access procedure with the base station, wherein the random access procedure includes i) transmitting a random access preamble to the base station, ii) receiving a random access response from the base station, iii) performing scheduled transmission using a scheduled uplink grant in the random access response, and iv) receiving a contention resolution message;

obtaining at least one of first time resource information indicating a first time resource on which the base station operates in half duplex (HD) and second time resource information indicating a second time resource on which the base station operates in full duplex (FD) from the base station;

obtaining at least one of first frequency resource information indicating a first frequency resource and second frequency resource information indicating a second frequency resource from the base station;

obtaining guard frequency configuration information for a guard frequency resource from the base station;

determining a downlink reception resource capable of performing downlink reception among the resources configured as a downlink bandwidth part (BWP) and an uplink transmission resource capable of performing uplink transmission among the resources configured as an uplink BWP, based on the first frequency resource information, the second frequency resource information and the guard frequency configuration information;

performing downlink reception in the downlink BWP or uplink transmission in the uplink BWP based on a specific time resource corresponding to the first time resource; and

performing downlink reception in the downlink reception resource or uplink transmission in the uplink transmission resource based on the specific time resource corresponding to the second time resource.

19. A method of operating a base station in a wireless communication system, the method comprising:

performing a random access procedure with a user equipment (UE), wherein the random access procedure includes i) receiving a random access preamble from the UE, ii) transmitting a random access response to the UE, iii) receiving a transmission scheduled by an uplink grant in the random access response from the UE and iv) transmitting a contention resolution message to the UE;

transmitting at least one of first time resource information indicating a first time resource on which the base station operates in half duplex (HD) and second time resource information indicating a second time resource on which the base station operates in full duplex (FD) to the UE;

transmitting at least one of first frequency resource information indicating a first frequency resource and second frequency resource information indicating a second frequency resource to the UE;

transmitting guard frequency configuration information for a guard frequency resource to the UE;

determining a downlink reception resource capable of performing downlink reception by the UE among the resources configured as a downlink bandwidth part (BWP) and an uplink transmission resource capable of performing uplink transmission by the UE among the resources configured as an uplink BWP, based on the first frequency resource information, the second frequency resource information and the guard frequency configuration information;

performing downlink transmission to the UE in the downlink BWP or uplink reception form the UE in the uplink BWP based on a specific time resource corresponding to the first time resource; and

performing i) downlink transmission to the UE in the downlink reception resource and uplink reception from another UE in the uplink transmission resource or ii) uplink reception from the UE in the uplink transmission resource and downlink transmission to the another UE in the downlink reception resource, based on the specific time resource corresponding to the second time resource.

20. A base station (BS), the BS comprising:

a transceiver;

at least one memory; and

at least one processor operably coupled to the at least one memory and the transceiver, wherein the processor is adapted to:

perform a random access procedure with a user equipment (UE), wherein the random access procedure includes i) receiving a random access preamble from the UE, ii) transmitting a random access response to the UE, iii) receiving a transmission scheduled by an uplink grant in the random access response from the UE and iv) transmitting a contention resolution message to the UE;

transmit at least one of first time resource information indicating a first time resource on which the base station operates in half duplex (HD) and second time resource information indicating a second time resource on which the base station operates in full duplex (FD) to the UE;

transmit at least one of first frequency resource information indicating a first frequency resource and second frequency resource information indicating a second frequency resource to the UE;

transmit guard frequency configuration information for a guard frequency resource to the UE;

determine a downlink reception resource capable of performing downlink reception by the UE among the resources configured as a downlink bandwidth part (BWP) and an uplink transmission resource capable of performing uplink transmission by the UE among the resources configured as an uplink BWP, based on the first frequency resource information, the second frequency resource information and the guard frequency configuration information;

perform downlink transmission to the UE in the downlink BWP or uplink reception form the UE in the uplink BWP based on a specific time resource corresponding to the first time resource; and

perform i) downlink transmission to the UE in the downlink reception resource and uplink reception from another UE in the uplink transmission resource or ii) uplink reception from the UE in the uplink transmission resource and downlink transmission to the another UE in the downlink reception resource, based on the specific time resource corresponding to the second time resource.

# FIG. 1

# FIG. 2

| UE | | BS | |
|---|---|---|---|
| PDCP | ⟷ | PDCP | |
| RLC | ⟷ | RLC | |
| MAC | ⟷ | MAC | |
| PHY | ⟷ | PHY | |

# FIG. 3

| UE | | BS | | MME | |
|---|---|---|---|---|---|
| NAS | ⟷ | | | NAS | |
| RRC | ⟷ | RRC | | | |
| PDCP | ⟷ | PDCP | | | |
| RLC | ⟷ | RLC | | | |
| MAC | ⟷ | MAC | | | |
| PHY | ⟷ | PHY | | | |

# FIG. 4

# FIG. 5

NG-RAN

gNB
- RRM between cells
- RB control
- Connection mobility control
- Wireless access control
- Measurement setting and provision
- Dynamic resource allocation (scheduler)

5GC

AMF
- NAS security
- Idle state mobility processing

UPF
- Mobility anchoring
- PDU processing

Internet

SMF
- UE IP address allocation
- PDU session control

EP 4 373 187 A1

# FIG. 6

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz

| Slot 0 (14symbols) |
|---|

1ms

30KHz

| Slot 0 (14symbols) | Slot 1 |
|---|---|

500us

60KHz

| Slot 0 (14symbols) | Slot 1 | Slot 2 | Slot 3 |
|---|---|---|---|

250us

120KHz

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 7

Resource grid

A carrier
(up to 3300 subcarriers,
i.e., 275 RBs)

A BWP

1RB=12 subcarriers

1 RE

1subcarrier

1 symbol

1=0 • • •

k=0

EP 4 373 187 A1

# FIG. 8

CCE #2    CCE #n

$N^{CORESET}_{RB}$ resource blocks

CCE #1

1, 2 or 3 OFDM symbols

# FIG. 9

Downlink only, or Uplink only

Frequency

RB index

Symbol index

One TTI

DL Control channel    UL Control channel

# FIG. 10

DL only

UL only

UL control

DL control

Mixed UL-DL

Slot

⬚ : DL    ⬚ : UL

# FIG. 11

Initial cell search | system information reception | random access procedure | general DL/UL Tx/Rx

P/S-SCH & [DLRS] & PBCH — S11

PDCCH/ PDSCH (BCCH) — S12

PRACH — S13

PDCCH/ PDSCH — S14

PUSCH — S15

PDCCH/ PDSCH — S16

PDCCH/ PDSCH — S17

PUSCH/ PUCCH — S18

• DL/UL ACK/NACK
• UE CQI/PMI/Rank report using PUSCH and/or PUCCH

EP 4 373 187 A1

# FIG. 12

(a)

DL

UL

Frequency

Carrier #0
Subband-wise Full Duplex

(b)

DL

UL

Frequency

Carrier #0
Spectrum-Sharing Full Duplex

# FIG. 13

(a)

(b)

# FIG. 14

A: First time resource
B: Second time resource

(a)

(b)

# FIG. 15

A: First time resource

B: Second time resource

(b)

(b)

# FIG. 16

(a)

(b)

# FIG. 17

Guard frequency resource

Guard frequency resource

DL — First frequency resource

UL — Second frequency resource

DL — First frequency resource

# FIG. 18

(a)

(b)

# FIG. 19

Receiving configuration information for a first time resource
and/or second time resource from the base station — S191

Receiving configuration information for a first frequency resource
and/or a second frequency resource from the base station — S192

Receiving configuration information
for guard frequency resource from the base station — S193

Determining a frequency resource capable of performing
DL reception among resources configured as the DL BWP
Determining a frequency resource capable of performing
UL transmission among resources configured as the UL BWP — S194

S195

On a specific time resource,
is the corresponding time
resource set as a second time resource?

NO — YES

S196

If the corresponding time resource is a DL resource,
performing the DL reception across the frequency
resources constituting the DL BWP
If the corresponding time resource is a UL resource,
performing the UL transmission across the frequency
resources constituting the UL BWP

S197

If the corresponding time resource a DL resource,
performing DL reception in a first frequency resource
among the resources constituting the DL BWP
If the corresponding time resource a UL resource,
performing UL transmission in a second frequency
resource among the resources constituting the UL BWP

EP 4 373 187 A1

# FIG. 20

First frequency resource

DL

Guard frequency resource

Second frequency resource

UL

Guard frequency resource

First frequency resource

DL

(a)

First frequency resource

DL

Guard frequency resource
Guard frequency resource

Second frequency resource

UL

Guard frequency resource
Guard frequency resource

First frequency resource

DL

(b)

# FIG. 21

First frequency resource — DL — 211

Basic guard frequency resource
Additional guard frequency resource

Second frequency resource — UL — 212

Additional guard frequency resource
Basic guard frequency resource

First frequency resource — DL — 211

# FIG. 22

First frequency resource

Guard frequency resource

Second frequency resource

DL

UL

Cell A

First frequency resource

Guard frequency resource

Second frequency resource

DL

UL

Cell B

(a)

First frequency resource

Guard frequency resource

Second frequency resource

DL

UL

Cell A

First frequency resource

Guard frequency resource

Second frequency resource

DL

UL

Cell B

(b)

EP 4 373 187 A1

# FIG. 23

Performing cell search based on primary synchronization signal, secondary synchronization signal, and physical broadcast channel (PBCH) demodulation reference signal (DMRS) ⟶ S231

Obtaining system information of the cell from the base station ⟶ S232

Performing a random access procedure with the base station ⟶ S233

Obtaining at least one of first time resource information indicating a first time resource in which the base station operates in half duplex (HD) and second time resource information indicating a second time resource in which the base station operates in full duplex (FD) ⟶ S234

Obtaining at least one of the first frequency resource information indicating a first frequency resource and the second frequency resource information indicating a second frequency resource from the base station ⟶ S235

Obtaining guard frequency configuration information for the guard frequency resource from the base station ⟶ S236

Based on the first frequency resource information, the second frequency resource information, and the guard frequency configuration information, determining i) a downlink reception resource that can perform downlink reception among the resources set as the downlink bandwidth part (DL BWP), and ii) an uplink transmission resource that can perform uplink transmission among the resources set as the uplink bandwidth part (uplink BWP) ⟶ S237

Based on a specific time resource corresponding to the first time resource, performing downlink reception in the downlink bandwidth part or uplink transmission in the uplink bandwidth part ⟶ S238

Based on the specific time resource corresponding to the second time resource, performing downlink reception on the downlink reception resource or uplink transmission on the uplink transmission resource ⟶ S239

# FIG. 24

```
┌─────────┐                                                          ┌─────────┐
│   BS    │                                                          │   UE    │
└─────────┘                                                          └─────────┘
     │                                                                    │
┌────┴────────────────────────────────────────────────────────────────────┐
│              Performing an initial access process                         │   S241
│ (searching/selecting a cell, obtaining system information, a random access process) │
└────┬────────────────────────────────────────────────────────────────────┘
     │                                                                    │
     │     First time resource information and/or second time resource information │  S242
     │ ─────────────────────────────────────────────────────────────────▶│
     │                                                                    │
     │ First frequency resource information and/or second frequency resource information │  S243
     │ ─────────────────────────────────────────────────────────────────▶│
     │                                                                    │
     │              Guard frequency configuration information             │  S244
     │ ─────────────────────────────────────────────────────────────────▶│
     │                                                                    │
     │                        ┌───────────────────────────────────────────┐
     │                        │   Based on the first frequency resource information, │  S245
     │                        │      the second frequency resource information,      │
     │                        │ and the guard frequency configuration information,   │
     │                        │  UE determining a downlink reception resource capable of │
     │                        │ performing downlink reception and an uplink transmission │
     │                        │  resource capable of performing uplink transmission  │
     │                        └───────────────────────────────────────────┘
     │                                                                    │
     │  Depending on whether a specific time resource is a first time resource or │
     │  a second time resource, communicating using a corresponding frequency │
     │           (taking into account whether a guard frequency is used)  │  S246
     │ ◀─────────────────────────────────────────────────────────────────│
     │                                                                    │
```

# FIG. 25

EP 4 373 187 A1

108    208

100                                          200

First Device        Second Device

102 — Processor(s)    Transceiver(s)        Transceiver(s)    Processor(s) — 202

Memory(s)                                    Memory(s)

104        106                              206        204

FIG. 26

codewords

Scrambler — 301

Modulator — 302

Layer Mapper — 303

layers

Antenna Port Mapper — 304

Resource Block Mapper — 305

Signal Generator — 306

antenna ports

Scrambler — 301

Modulator — 302

Resource Block Mapper — 305

Signal Generator — 306

61

# FIG. 27

# FIG. 28

2340

2335

receiver

transceiver

transmitter

2305

power
management
module

2355

battery

2310

DSP/
micro processor

display — 2315

keypad — 2320

GPS chip — 2360

sensor — 2365

2350    2345

flash memory
ROM, SRAM

SIM card

2330    2325

# FIG. 29

Processor
(2000)

Control channel
monitoring unit
(2010)

Data channel
transceiving unit
(2020)

# FIG. 30

Processor
(3000)

Control information/
data generation module
(3010)

Transmission/
reception module
(3020)

# FIG. 31

108, 208

Processor(s)
(102, 202)

Memory(s)
(104, 204)

Transceiver(s)
(106, 206)

# FIG. 32

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit, driving unit, computing unit)

EP 4 373 187 A1

# FIG. 33

100

140a

Power supply unit

108

110

Communication unit

120

Control unit

130

Memory unit

140c

I/O unit

Display

140d

Interface unit

140b

# FIG. 34

EP 4 373 187 A1

## INTERNATIONAL SEARCH REPORT

| International application No. |
| --- |
| **PCT/KR2022/010200** |

### A. CLASSIFICATION OF SUBJECT MATTER

**H04W 72/04**(2009.01)i; **H04W 72/08**(2009.01)i; **H04L 5/00**(2006.01)i; **H04L 5/14**(2006.01)i; **H04L 5/16**(2006.01)i; **H04J 11/00**(2006.01)i

According to International Patent Classification (IPC) or to both national classification and IPC

### B. FIELDS SEARCHED

Minimum documentation searched (classification system followed by classification symbols)

H04W 72/04(2009.01); H04B 7/204(2006.01); H04B 7/26(2006.01); H04L 1/00(2006.01); H04L 27/26(2006.01); H04L 5/00(2006.01); H04W 36/00(2009.01); H04W 36/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: cell search, PBCH DMRS, random access procedure, half duplex, full duplex, guard, downlink/uplink bandwidth part

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2007-0069523 A (SAMSUNG ELECTRONICS CO., LTD.) 03 July 2007 (2007-07-03)<br>See paragraphs [0024]-[0041]; claim 1; and figure 4. | 1-20 |
| Y | WO 2021-066278 A1 (LG ELECTRONICS INC.) 08 April 2021 (2021-04-08)<br>See paragraphs [0076], [0131] and [0351]; and claims 1 and 5. | 1-20 |
| Y | KR 10-2020-0108295 A (GUANGDONG OPPO MOBILE TELECOMMUNICATIONS CORP., LTD.) 17 September 2020 (2020-09-17)<br>See paragraphs [0061]-[0095]; and claim 1. | 5,13 |
| Y | KR 10-2021-0033861 A (SAMSUNG ELECTRONICS CO., LTD.) 29 March 2021 (2021-03-29)<br>See paragraphs [0048]-[0063]; and claims 1 and 4. | 6-8,14-16 |
| A | SAMSUNG. Email discussion summary for [RAN-R18-WS-eMBB-Samsung]. RWS-210541, 3GPP TSG RAN Rel-18 workshop, Electronic Meeting. 25 June 2021.<br>See pages 16 and 18. | 1-20 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 November 2022** | **16 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><th colspan="3" rowspan="2">INTERNATIONAL SEARCH REPORT<br>Information on patent family members</th><th colspan="2">International application No.</th></tr>
<tr><th colspan="2">PCT/KR2022/010200</th></tr>
</table>

| Patent document cited in search report | | | Publication date (day/month/year) | Patent family member(s) | | | Publication date (day/month/year) |
|---|---|---|---|---|---|---|---|
| KR | 10-2007-0069523 | A | 03 July 2007 | EP | 1804536 | A2 | 04 July 2007 |
| | | | | EP | 1804536 | A3 | 01 May 2013 |
| | | | | EP | 1804536 | B1 | 31 July 2019 |
| | | | | KR | 10-0957414 | B1 | 11 May 2010 |
| | | | | US | 2007-0230376 | A1 | 04 October 2007 |
| | | | | US | 8331283 | B2 | 11 December 2012 |
| WO | 2021-066278 | A1 | 08 April 2021 | None | | | |
| KR | 10-2020-0108295 | A | 17 September 2020 | CN | 111567086 | A | 21 August 2020 |
| | | | | EP | 3737150 | A1 | 11 November 2020 |
| | | | | EP | 3737150 | B1 | 06 October 2021 |
| | | | | JP | 2021-516465 | A | 01 July 2021 |
| | | | | US | 11140643 | B2 | 05 October 2021 |
| | | | | US | 2020-0337001 | A1 | 22 October 2020 |
| | | | | WO | 2019-136646 | A1 | 18 July 2019 |
| KR | 10-2021-0033861 | A | 29 March 2021 | CN | 114521345 | A | 20 May 2022 |
| | | | | US | 2021-0091987 | A1 | 25 March 2021 |
| | | | | WO | 2021-054690 | A1 | 25 March 2021 |

Form PCT/ISA/210 (patent family annex) (July 2022)